# EUROPÄISCHE PATENTSCHRIFT

(11) **EP 1 908 711 B1**
(45) Veröffentlichungstag und Bekanntmachung des Hinweises auf die Patenterteilung: **23.07.2014**
(21) Anmeldenummer: 07019228.1
(22) Anmeldetag: 29.09.2007
(51) Int. Cl.: B65G 57/06, B65G 57/24, B65G 47/66

(54) **Vorrichtung zum Anheben einer Lage, bestehend aus einer Vielzahl an Behältern oder dergleichen**
Device for raising a layer consisting of a number of containers or similar
Dispositif de levage d'une couche constituée d'une multitude de récipients ou analogues

(30) Priorität: 04.10.2006 DE 202006015281 U
(43) Veröffentlichungstag der Anmeldung: 09.04.2008
(73) Patentinhaber: MSK-VERPACKUNGS-SYSTEME GESELLSCHAFT MIT BESCHRÄNKTER HAFTUNG, 47533 Kleve (DE)
(72) Erfinder: Michels, Frank, 47533 Kleve (DE)
(74) Vertreter: Rohmann, Michael

(56) Entgegenhaltungen:
- WO-A-2006/000847
- DE-A1- 4 412 830
- JP-A- 60 137 723
- US-A- 4 255 074

## Beschreibung

Die Erfindung betrifft eine Vorrichtung zum Anheben einer Lage, bestehend aus einer Vielzahl an Behältern oder dergleichen,
- mit einer Unterlage,
- einer Hebeeinrichtung, wobei die Hebeeinrichtung eine parallel zur Unterlage verfahrbare, insbesondere als Jalousie ausgebildete, Transportfläche aufweist, und vorzugsweise auch mit einem derart ausgebildeten Rahmen, dass der Rahmen durch Überstülpen um die Lage der Behälter oder durch Einlaufen der Behälter in den Rahmen herumlegbar ist,
wobei vor dem Anheben der Lage die Hebeeinrichtung derart an die Lage heranbewegt wird, dass die noch nicht in ihre Hebeposition ausgefahrene Transportfläche mit ihrer Vorderkante vor der ersten Reihe der Lage ist und dann unter die Lage in ihre Hebeposition durch Relativbewegung in Bezug auf die Behälter unter die auf der Unterlage stehenden Behälter gefahren wird. Unter Behälter werden auch Stückgüter, wie z. B. Dosen, Flaschen, Hohlglas, Behälterglas oder Eimer, verstanden, die eine unterseitige Standfläche aufweisen, ist der sie auf eine Unterlage aufstellbar sind.

In der Industrie, beispielsweise in der Glasindustrie oder Behälterindustrie, müssen die hergestellten Behälter, wie z. B. Flaschen, von einer Unterlage auf eine Palette übersetzt werden. Auf der Palette werden dann mehrere Lagen an Behältern übereinander gestapelt, die später dann beispielsweise durch einen übergezogenen Folienschlauch gesichert werden. Bei der Unterlage handelt es sich üblicherweise um ein umlaufendes Förderband, welches die Behälter heran transportiert. Die Behälter werden dann auf einer der Palettengröße entsprechenden Standfläche durch einen Anschlag aufgestaut. Dieser Bereich wird auch Auflaufbereich genannt. Sobald eine Lage an Behältern vollständig ist, werden die Behälter durch eine Hebeeinrichtung gegriffen und auf eine Palette bzw. auf die obere bereits abgesetzte Lage eines Palettenstapels abgesetzt.

Bei einer bekannten Vorrichtung grenzt hierzu an den Auflaufbereich ein in der Höhe verstellbarer Verfahrtisch an. Die Lage an Stückgütern, wie Behältern, wird auf den Verfahrtisch horizontal geschoben. Dann wird der Verfahrtisch, der wiederum an die Palette angrenzt, in die gewünschte Höhe verfahren, so dass dann die Lage an Stückgütern, wie Behältern, in einem letzten Schritt auf die Palette oder - sofern schon mehrere Lagen auf der Palette übereinander gestapelt sind - auf den Zwischenboden, der oberseitig auf die zuletzt abgesetzte Lage aufgelegt worden ist, geschoben.

Aus JP 60-137723 A ist eine Vorrichtung zum Schichten und Fördern von kastenförmigen Gütern bekannt, die dem Oberbegriff der Ansprüche 1, 2, 4 und 5 entspricht. Die Güter werden zunächst auf Rollen geführt bzw. gefördert, die mit Federbeinen an einem Träger angeschlossen sind. Quer zu der Förderrichtung wird eine Transporteinrichtung unter die Güter geführt, wobei an den Federbeinen angeordnete Vorsprünge von einer an der Trans-portfläche angeordneten Abschrägung nach unten gedrückt werden, so dass die Transportfläche in den auf diese Weise gebildeten Spalt zwischen den Gütern und den auf den Federbeinen gelagerten Rollen vorgeschoben werden kann.

Nachteilig hierbei ist, dass derartige Anlagen einen erhöhten Platzbedarf aufgrund des Verfahrtisches, der zudem in der Höhe veränderbar sein muss, erfordern. Darüber hinaus sind die Anordnungsmöglichkeiten von dem Aufstaubereich und dem Absetzbereich aufgrund des dazwischen angeordneten Verfahrtisches beschränkt. Auch können derartige Anlagen nur bedingt beispielsweise bei Behältern, sehr geringer Durchmesser aufgrund der Übergänge zwischen dem Aufstaubereich und dem Verfahrtisch einerseits und dem Verfahrtisch und dem Absetzbereich andererseits eingesetzt werden.

Aufgabe der Erfindung ist es, die vorgenannten Nachteile zu vermeiden und eine Vorrichtung anzugeben, die bei geringerem Platzbedarf ein Übersetzen der Stückgüter, wie beispielsweise Behälter oder Dosen, von dem Lagentisch bzw. dem Aufstaubereich in den Absetzbereich, d. h. auf die Palette, ermöglicht, ohne dass dabei ein auf dem Lagentisch erzeugtes Lagenbild wesentlich verändert wird. Gleichzeitig soll die Vorrichtung ein Übersetzen von Behältern auch unterschiedlicher Durchmesser und/oder Formen ermöglichen, ohne dass eine Anpassung erforderlich ist.

Diese Aufgabe wird durch die Vorrichtung nach Anspruch 1 gelöst, wobei die Vorrichtung so ausgebildet ist, dass die Unterlage zumindest in Verfahrrichtung flexibel ausgebildet ist, wobei eine Unterlagehebeeinrichtung zum Anheben der Unterlage vorgesehen ist, wobei die Unterlagehebeeinrichtung als eine, vorzugsweise im Querschnitt zumindest in Unterführrichtung gesehen seitlich abgeflachte, über die ganze Breite der Reihe erstreckende Erhöhung ausgebildet ist,
so dass die Unterlagehebeeinrichtung in Unterführrichtung gesehen in dem Bereich, der zum einen an die Reihe A an Behältern, unter die als nächstes die Transportfläche verlagert wird, angrenzt und zum anderen der noch nicht untergeführen Transportfläche zugewandt ist, in einem geringen Abstand vor der Vorderkante der Transportfläche angeordnet und synchron mit der in der Hebeposition verfahrbaren Transportfläche verfahren werden kann, wobei die Unterlagehebeeinrichtung über ein einen gleichbleibenden Abstand erzeugendes Verbindungselement mit der Transportfläche gekoppelt ist oder wobei die Unterlagehebeeinrichtung über einen separaten Antrieb verfahrbar ist,
so dass unter jedem Behälter zu jedem Zeitpunkt ein Teilbereich der Unterlage befindlich ist und bei der Reihe A an Behältern, unter die als nächstes die Transportfläche verlagert wird, zumindest auf ihrer der Transportfläche zugewandten Seite, bevor die Unterlage heruntergeführt wird, ein Freiraum zwischen den Böden der Behälter dieser Reihe A und der Unterlage erzeugt wird, und so dass die Transportfläche unter die Behälter dieser Reihe A geführt werden kann.

Weiterhin wird die Aufgabe dadurch gelöst, dass die Vorrichtung gemäß dem Patentanspruch 2 ausgebildet ist. Zur Lösung der Aufgabe lehrt die Erfindung fernerhin eine Vorrichtung gemäß den Patentansprüchen 4 und 5. Ergänzend wird die Aufgabe durch Verfahren gemäß den Patentansprüchen 7 bis 10 gelöst. Durch den zumindest auf ihrer der Transportfläche zugewandten Seite gegebenen bzw. erzeugten Freiraum zwischen den Böden der Behälter dieser Reihe und der Unterlage kann die Unterlage, ohne dass die Behälter seitlich beim Herunterfahren der Transportfläche berührt werden, was zu Beschädigungen führen kann, heruntergeführt werden.

Bei einer möglichen Ausgestaltung der Vorrichtung können die Behälter der Reihe oberseitig, beispielsweise mittels eines in vertikaler Richtung verfahrbaren Anschlages, durch Antippen gekippt werden, so dass damit ein Freiraum erzeugt und so die Unterlage untergeführt werden kann. Andere konstruktive Maßnamen zur Erzeugung eines Freiraums sind möglich.

Die erfindungsgemäße Vorrichtung erlaubt damit eine direkte Übernahme der Behälter vom Auflauftisch bzw. Auflaufbereich, so dass kein Verfahrtisch, der zusätzlichen Platz erfordert, mehr wie bisher erforderlich ist. Gleichzeitig ist durch die erfindungsgemäße Vorrichtung eine solche Übernahme möglich, bei der das auf dem Lagentisch bzw. dem Auflauftisch erzeugte Lagenbild bei der Übernahme nicht wesentlich verändert wird. Auch können mit der erfindungsgemäßen Vorrichtung Behälter unterschiedlicher Durchmesser bzw.

Formen übernommen werden, ohne dass es einer besonderen Anpassung, wie z. B. anderer Greifwerkzeuge oder Saugplatten, an die zu übernehmenden Gegenstände bedarf.

Die Behälter benachbarter Reihen können beispielsweise nach Art eines Schachbretts zueinander angeordnet sein. Es ist aber auch durchaus möglich, dass benachbarte Reihen um den halben Durchmesser eines Behälters versetzt zueinander angeordnet sind. Auch die äußere Kontur der Lage ist beliebig. Andere Lagenbilder sind selbstverständlich möglich.

Die Unterlage der Vorrichtung nach Anspruch 4 oder 5 weist auf seiner der Transportfläche zugewandten Fläche in dem Bereich, der zum einen an die Reihe an Behältern, unter die als nächstes die Transportfläche verlagert wird, angrenzen und zum anderen der noch nicht untergeführten Transportfläche zugewandt ist, zumindest eine Ausnehmung auf und die Transportfläche weist an der Vorderkante in Unterführrichtung gesehen zumindest einen derart ausgestalteten Vorderkantenbereich auf, welcher bei Verlagerung der Transportfläche in ihre Hebeposition in die korrespondierende Ausnehmung einbringbar und insoweit unter die Reihe an Behältern unterführbar ist. Durch das Einbringen des jeweiligen Vorderkantenbereiches der Vorderkante in die korrespondierende Ausnehmung kann die Transportfläche einfach unter die Reihe an Behältern untergeführt werden, da die Behälter dieser Reihe im Bereich ihrer Seitenwände nicht berührt werden.

Nach Anspruch 4 sind mehrere parallel zur Unterführrichtung ausgerichtete und rinnenartig ausgebildete Ausnehmungen vorgesehen. Sofern die Unterlage ortsfest ist, müssen die Ausnehmungen sich über die komplette Länge erstrecken. Dies muss nicht der Fall sein, wenn sich beispielsweise die Unterlage zusammen mit der Transportfläche beim Unterführen der Transportfläche in Unterführrichtung bewegt.

Nach den Ansprüchen 1 und 2 ist die Unterlage zumindest in Verfahrrichtung flexibel ausgebildet. Selbstverständlich kann die Unterlage auch orthogonal zur Verfahrrichtung flexibel ausgebildet sein. Bei einer solchen Ausführungsform ist die Unterlage beispielsweise als Förderband ausgebildet.

Die Unterlage der Vorrichtung nach Anspruch 5 ist als in Verfahrrichtung bewegbare, insbesondere aus mehreren, durch senkrecht zur Verfahrrichtung ausgerichtete Achsen gelenkig miteinander verbundenen Segmenten bestehende, Förderfläche ausgebildet. Erstreckt sich beispielsweise ein Segment über die komplette Breite der Unterlage, so kann als Ausnehmung eine durchgehende Nut vorgesehen sein.

Jedes Segment weist eine Ausnehmung auf, als orthogonal zur Unterführrichtung ausgerichtete Nut ausgebildet. Da die Vorderkante sich beim Unterführen in der Ausnehmung befindet, muss die Unterlage synchron mit der Transportfläche beim Unterführen der Transportfläche in Unterführrichtung bewegt werden. Es liegt auf der Hand, dass die Ausnehmung nicht über die komplette Breite der Unterlage bzw. der Reihe an Behältern durchgehend ausgebildet sein muss. Es ist durchaus möglich, dass zumindest im gleichen Abstand zu den Behältern entlang der Reihe Ausnehmungsteilbereiche vorgesehen sind, wobei die Vorderkante dann mit den entsprechend ausgebildeten Vorderkantenbereichen in die korrespondierenden Ausnehmungsteilbereiche einbringbar ist. Der Abstand der Ausnehmungsteilbereiche und die Breite der Ausnehmungsteilbereiche ist von dem Durchmesser bzw. den Abmessungen der Behälter bedingt.

Nach Anspruch 4 erstrecken sich die Ausnehmungen parallel zur Unterführrichtung. In einem solchen Fall kann die Unterlage auch ortsfest sein. Die Transportfläche ragt mit den Vorderkantenbereichen in die betreffende Ausnehmung ein und ist insoweit unter die Reihe an Behältern unterführbar.

Der Abstand der parallel zur Unterführrichtung ausgerichteten Ausnehmung ist von der Größe der Behälter abhängig.

Nach den Ansprüchen 1 und 2 ist die die Unterlage anhebende Unterlagehebeeinrichtung vorgesehen, wobei die Unterlagehebeeinrichtung in Unterführrichtung gesehen in dem Bereich, der zum einen an die Reihe an Behältern, unter die als nächstes die Transportfläche verlagert wird, angrenzt und zum anderen der noch nicht untergeführten Transportfläche zugewandt ist, in einem geringen Abstand vor der Vorderkante der Transportfläche angeordnet und synchron mit der in die Hebeposition verfahrbaren Transportfläche verfahrbar angeordnet ist. Der Abstand der Unterlagehebeeinrichtung zu der Reihe an Behältern, unter die als nächstes die Transportfläche verlagert wird, ist kleiner als die Hälfte des Durchmessers der anzuhebenden Behälter bzw. die Hälfte der Tiefe der anzuhebenden Stückgüter. Durch die Unterlagehebeeinrichtung wird erfindungsgemäß zunächst ein Freiraum erzeugt, so dass dann die Transportfläche untergeführt werden kann.

Die Unterlagehebeeinrichtung der Vorrichtung nach den Ansprüchen 1 und 2 ist über ein einen gleich bleibenden Abstand erzeugendes Verbindungselement mit der Transportfläche gekoppelt, oder über einen separaten Antrieb verfahrbar.

Damit die Unterlagehebeeinrichtung nach Erreichen der Hebeposition der Transportfläche einfacher an ihre anfängliche Position zurückverfahren werden kann, bietet sich an, wenn die Unterlagehebeeinrichtung absenkbar gelagert ist.

Denn dann wird beim Zurückfahren der Unterlagehebeeinrichtung aufgrund der Absenkung die Unterlage nicht mehr angehoben.

Die Unterlagehebeeinrichtung ist nach Anspruch 1 als eine, vorzugsweise im Querschnitt zumindest in Unterführrichtung gesehen seitlich abgeflachte, über die ganze Breite der Reihe erstreckende Erhöhung ausgebildet. Die Unterlagehebeeinrichtung muss nicht über die komplette Breite der Reihe konstant gleich hoch sein.

Nach Anspruch 2 besteht die Unterlagehebeeinrichtung aus wenigstens zwei in einer Ebene liegenden Flächenelementen, die in dieser Ebene relativ zueinander in eine ineinander eingeschobene Position einerseits und in eine aneinander angrenzende Position andererseits bewegbar sind, wobei die jeweils aufeinander zuweisenden Kanten der jeweiligen Flächenelemente kammartig ausgebildet sind und versetzt zueinander angeordnete in der Ebene vorstehende Flächenteilbereiche aufweisen. Bei Heranbewegen der Hebeeinrichtung an die aufzunehmende Lage an Behältern befinden sich die Flächenelemente in der aneinander angrenzenden Position. Dann wird die Transportfläche zusammen mit dem angrenzenden Flächenelement synchron verfahren. Bei dieser Relativbewegung werden die beiden kammartig ausgebildeten Flächenelemente ineinander verfahren. Erreicht die Transportfläche ihre Hebepostion, befinden sich die Flächenelemente in der einander eingeschobenen Position. Statt der kammartigen Ausbildung der jeweils aufeinander zuweisenden Kanten der jeweiligen Flächenelemente sind selbstverständlich auch andere Ausführungsformen, beispielsweise Scherenmechanismen denkbar, die so ausgebildet sind, dass auch in der aneinander angrenzenden Position der Flächenelemente die Behälter gehalten werden.

Nach den Ansprüchen 4 und 5 weist die Förderkante der Transportfläche eine zum freien Ende hin nach unten zur Unterlage schräg abwärts verlaufende Fläche auf, um das Unterführen aufgrund der spitz zulaufenden Vorderkante noch mehr zu vereinfachen.

Dabei können die Behälter dieser Reihe zumindest in dem Bereich ihrer der Transportfläche zugewandten Seite angehoben werden. Selbstverständlich können die Behälter dieser Reihe auch ganz angehoben werden.

Alternativ kann die Unterlage in dem Bereich, der zum einen an die Reihe an Behältern, unter die als nächstes die Transportfläche verlagert wird, angrenzt und zum anderen der noch nicht untergeführten Transportfläche zugewandt ist, abgesenkt werden. Selbstverständlich ist auch ein Absenken der Unterlage in Verbindung mit einem Anheben der Behälter dieser Reihe zumindest in dem Bereich ihrer der Transportfläche zugewandten Seite möglich.

Dabei kann bei den Behältern dieser Reihe zunächst nur auf ihrer der Transportfläche zugewandten Seite ein Freiraum erzeugt werden und insbesondere kann beim Unterführen der Transportfläche durch die Berührung der Vorderkante der Transportfläche mit wenigstens einem Bereich der Behälterunterseite die Ausrichtung der Behälter verändert werden. Die Erzeugung des Freiraums in dem ersten Schritt kann mit oder ohne einer Änderung der Ausrichtung der Behälter erfolgen. Werden die Behälter dieser Reihe beispielsweise zunächst nur auf ihrer der Transportfläche zugewandten Seite ein wenig angehoben, wodurch sich die Ausrichtung der Behälter dieser Reihe verändert, wird bei Herunterführen der Transportfläche bei Berührung der Vorderkante der Transportfläche mit wenigstens einem Bereich der Behälterunterseite die Ausrichtung der Behälter nochmals geändert.

Alternativ kann bei der Reihe an Behältern, unter die als nächstes die Transportfläche verlagert werden soll, ein solcher Freiraum zwischen den Böden der Behälter dieser Reihe und der Unterlage erzeugt werden, dass bei Unterführen der Transportfläche die Ausrichtung der Behälter im Wesentlichen unverändert bleibt. Bei einer solchen Verfahrensweise reicht der erzeugte Freiraum aus, um bei Unterführen der Transportfläche die Ausrichtung der durch einen Freiraum zur Transportfläche beabstandeten Behälter aufrechtzuerhalten.

Die Reihe an Behältern, unter die als nächstes die Transportfläche verlagert wird, kann in etwa orthogonal zu der Unterführrichtung auf der Ebene der Transportfläche liegen. Selbstverständlich kann die Vorderkante der Transportfläche auch in einem Winkel ungleich 90° zur Unterführrichtung ausgerichtet sein, so dass sich die Behälter der Reihe, unter die die Transportfläche als nächstes untergeführt werden soll, in "unterschiedlichen" Reihen bezogen auf die Lage befinden. Selbstverständlich kann bei entsprechender konstruktiver Ausgestaltung die Reihe an Behältern, unter die als nächstes die Transportfläche verlagert wird, auch anders, wie z. B. zick-zack-förmig, ausgebildet sein.

Als Unterlage kann ein Förderband vorgesehen sein, auf dem die Lage an Behältern mit dem gewünschten Lagenbild durch Stauen oder eine weitere Vorrichtung erzeugt wird. Die Behälter können beispielsweise vor einem, insbesondere quer, zur Förderrichtung ausgerichteten Anschlag aufgestaut werden oder durch die Vorrichtung frei und drucklos zusammengestellt werden. Bei einer solchen Ausführungsform ist verständlicherweise zu jedem Zeitpunkt nur ein Teilbereich des Förderbandes unterhalb der Lage. Bei Bewegung des Förderbandes werden die Behälter vor dem Anschlag aufgestaut, bis sich eine volle Lage ergibt. Dann wird die Hebeeinrichtung derart an die Lage heranbewegt, dass die noch nicht in ihre Hebeposition ausgefahrene Transportfläche mit ihrer Vorderkante vor der ersten Reihe der Lage ist und dann unter die Lage in ihrer Hebeposition durch Relativbewegung in Bezug auf die Behälter unter die auf der Unerlage stehenden Behälter gefahren wird.

Im Folgenden werden in den Zeichnungen dargestellte Ausführungsbeispiele der Erfindung erläutert. Es zeigen:
- **Fig. 1**: eine Draufsicht auf einen Palettierer mit Auflauftisch und Absetzbereich,
- **Fig. 4 - Fig. 7**: eine erste Ausführungsform einer erfindungsgemäßen Vorrichtung,
- **Fig. 8 - Fig.13**: eine zweite Ausführungsform einer erfindungsgemäßen Vorrichtung,
- **Fig. 14 - Fig. 18**: eine dritte Ausführungsform einer erfindungsgemäßen Vorrichtung,
- **Fig. 19 + Fig. 20**: eine vierte Ausführungsform einer erfindungsgemäßen Vorrichtung und
- **Fig. 21**: Skizzen A bis I zur Illustration der möglichen Bewegungsrichtungen.

In allen Figuren werden für gleiche bzw. gleichartige Bauteile übereinstimmende Bezugszeichen verwendet.

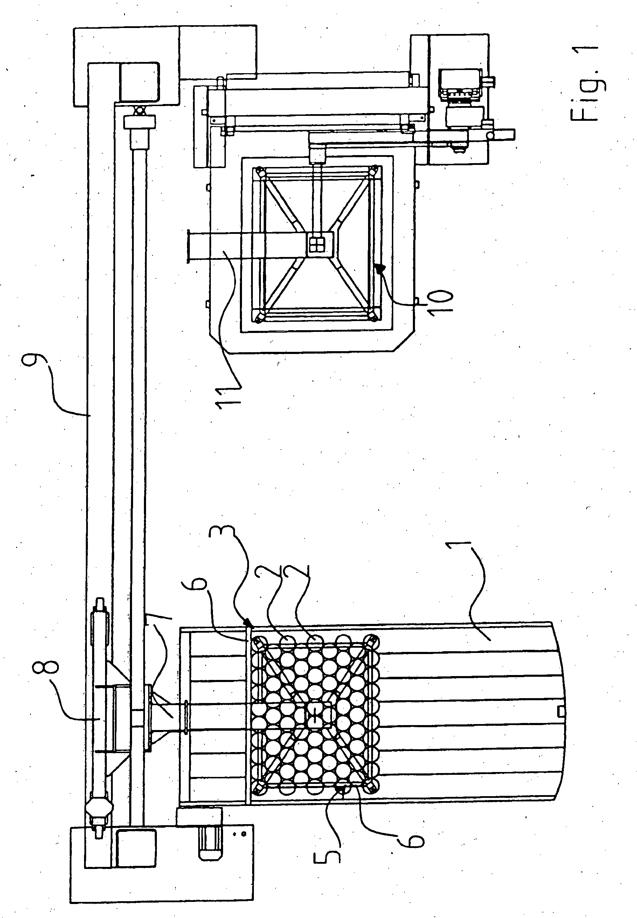

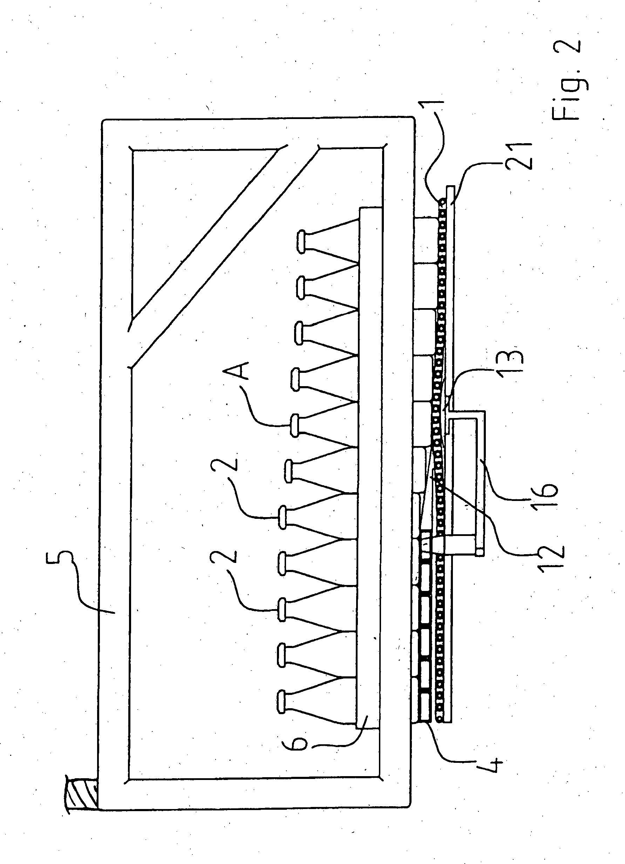

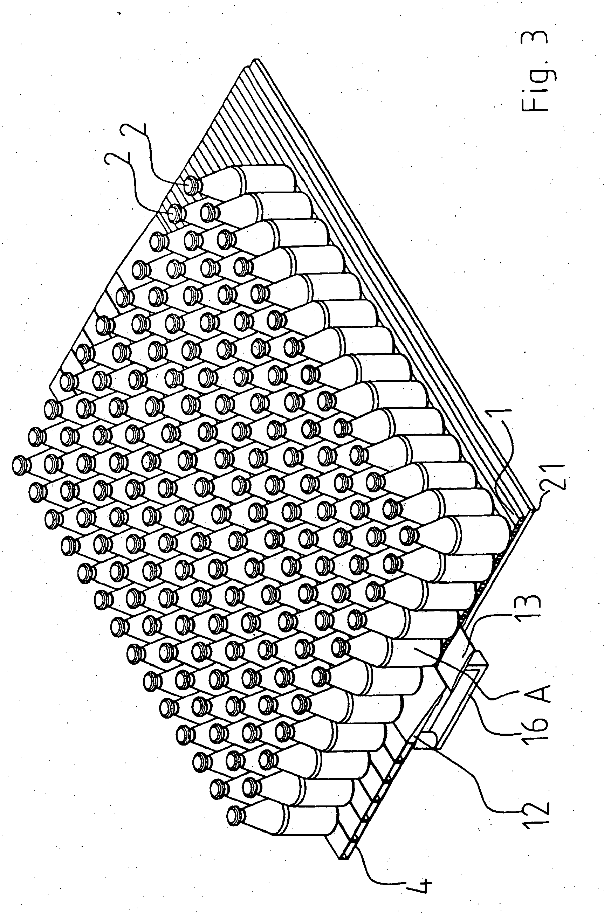

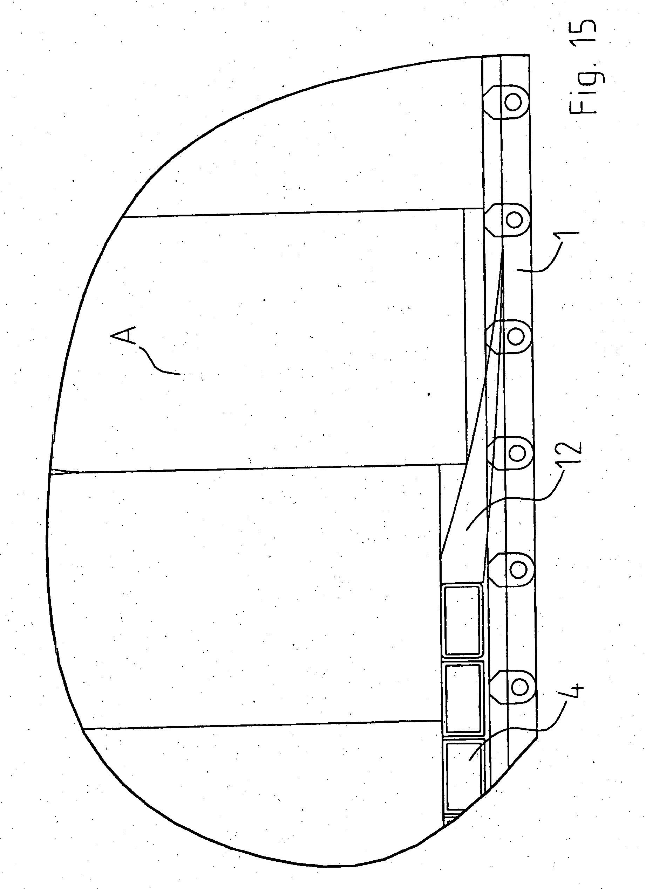

In Fig. 1 ist die Draufsicht auf einen Palettierbereich dargestellt. In dem linken Teil von Fig. 1 befindet sich ein als Unterlage 1 ausgebildetes Förderband. Das Förderband ist, genauso wie in den Fig. 2 bis Fig. 21, umlaufend und wird zwischen zwei nicht dargestellten Umlenkrollen umgelenkt. Der in Fig. 1 dargestellte Teil des Förderbandes stellt gleichzeitig den Auflaufbereich dar. In dem Auflaufbereich wird eine Lage an Behältern 2 vor einem nicht dargestellten Anschlag aufgestaut.

Ferner ist eine Hebeeinrichtung 3 vorgesehen, die eine parallel zur Unterlage 1 verfahrbare und als Jalousie ausgebildete Transportfläche 4 sowie einen Rahmen 5 aufweist. Der Rahmen 5 hat in dem dargestellten Ausführungsbeispiel vier Wangen 6, die zur späteren Zentrierung der Behälter 2 in Richtung des Mittelpunkts der Lage bewegbar sind.

Die Hebeeinrichtung 3 ist über eine Tragekonstruktion 7 an einem Verfahrwagen 8 befestigt. Die Tragekonstruktion 7 erlaubt ein Anheben der Hebeeinrichtung 3 in vertikaler Richtung. Für ein horizontales Verfahren ist der Verfahrwagen 8 an einer Verfahrkonstruktion 9 verfahrbar gelagert. Parallel und im Abstand zum Auflaufbereich ist der Absetzbereich, in dem die Lagen auf einer Palette 10 abgesetzt werden.

Damit übereinander gestapelte Lagen an Behältern 2 nicht in einem direkten Kontakt sind, wird durch eine angedeutete Zwischenbodenauflegeeinrichtung 11 jeweils ein Zwischenboden oberseitig auf eine bereits abgesetzte Lage aufgelegt, bevor die nächste Lage abgesetzt wird.

Nach dem Absetzen der Lage wird die Hebeeinrichtung 3 wieder zum Auflauftisch zurückbewegt. Vor dem Anheben der Lage wird die Hebeeinrichtung 3 derart an die anzuhebende Lage heranbewegt, dass die noch nicht in ihre Hebeposition ausgefahrene Transportfläche 4 sich mit ihrer Vorderkante 12 vor der ersten Reihe der Lage befindet und dann unter die Lage in ihre Hebepostion durch Relativbewegung in Bezug auf die Behälter 2 unter die auf der Unterlage 1 stehenden Behälter 2 gefahren wird. Nach Anheben der neuen Lage wird die Hebeeinrichtung 3 wieder zu dem Absetzbereich bewegt und die Lage wird auf dem Zwischenboden abgesetzt. Dieser Vorgang wiederholt sich solange, bis die gewünschte Anzahl an Lagen abgesetzt worden ist. Dann wird die Palette 10 mit den Lagen abtransportiert und eine neue Palette 10 im Absetzbereich abgesetzt.

In den Fig. 2 bis Fig. 7 ist eine Ausführungsform dargestellt, bei der eine Unterlagehebeeinrichtung 13 unterhalb der Unterlage 1 vorgesehen ist. Die Unterlagehebeeinrichtung 13 ist als eine, vorzugsweise im Querschnitt zumindest in Unterführrichtung 14 gesehen seitlich abgeflachte, über die ganze Breite der Reihe erstreckende Erhöhung ausgebildet. Die Unterlagehebeeinrichtung 13 ist unterhalb des als Unterlage 1 ausgebildeten Förderbandes angeordnet.

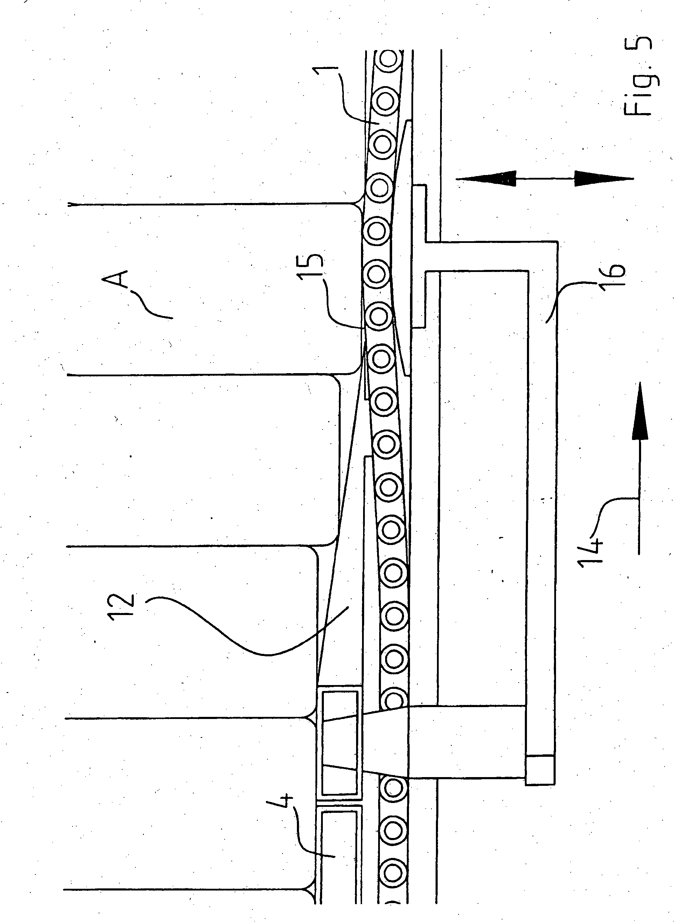

Wie insbesondere in Fig. 5 angedeutet, bewirkt die Unterlagehebeeinrichtung 13 ein lokales Anheben der Unterlage 1 um die Höhe "a". Infolgedessen wird bei der Reihe A an Behältern 2, unter die als nächstes die Transportfläche 4 verlagert wird, auf ihrer der Transportfläche 4 zugewandten Seite ein Freiraum 15 zwischen den Böden der Behälter 2 dieser Reihe A und der Unterlage 1 erzeugt. Dieser Freiraum 15 erlaubt ein einfaches Unterführen der Transportfläche 4 unter die Behälter 2 dieser Reihe A. Dieses Anheben setzt sich Reihe für Reihe fort, bis die Transportfläche 4 unter alle Behälter 2 der Lage untergeführt worden ist und damit ihre Hebeposition erreicht hat.

In den in den Fig. 2 bis Fig. 7 dargestellten Positionen ist die Transportfläche 4 unter etwa die Hälfte der Reihen der Lage untergeführt worden. Zum besseren Unterführen weist die Vorderkante 12 der Transportfläche 4 eine zum freien Ende hin nach unten zur Unterlage 1 schräg abwärts verlaufende Fläche auf.

In den Fig. 2 bis Fig. 5 ist die Unterlagehebeeinrichtung 13 über ein einen gleich bleibenden Abstand erzeugendes Verbindungselement 16 mit der Transportfläche 4 der Unterlagehebeeinrichtung 13 gekoppelt. Damit die Unterlagehebeeinrichtung 13 nach Erreichen der Hebeposition der Transportfläche 4 einfacher in ihre anfängliche Position zurückverfahren werden kann, ist die Unterlagehebeeinrichtung 13 in Richtung des dargestellten Pfeils absenkbar gelagert.

Hierdurch wird beim Zurückfahren der Unterlagehebeeinrichtung 13 aufgrund der Absenkung die Unterlage 1 nicht mehr angehoben.

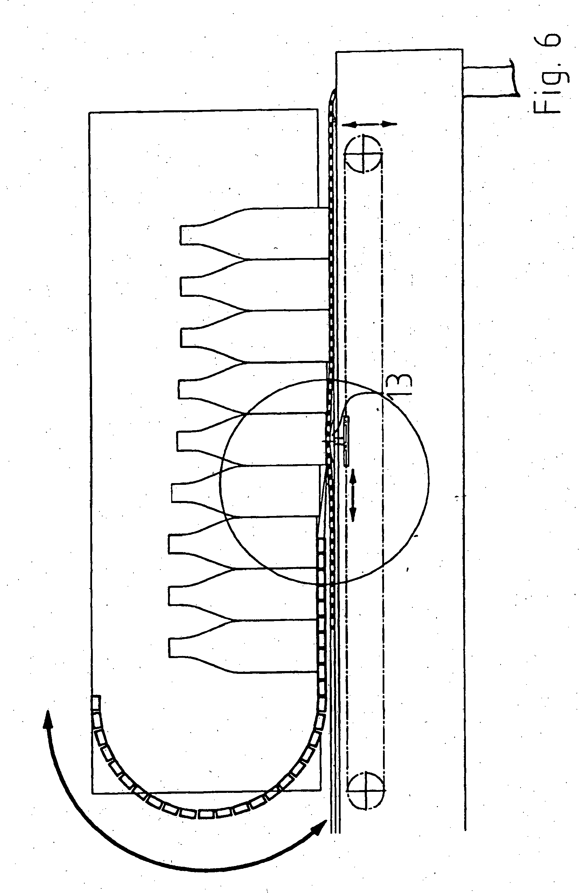

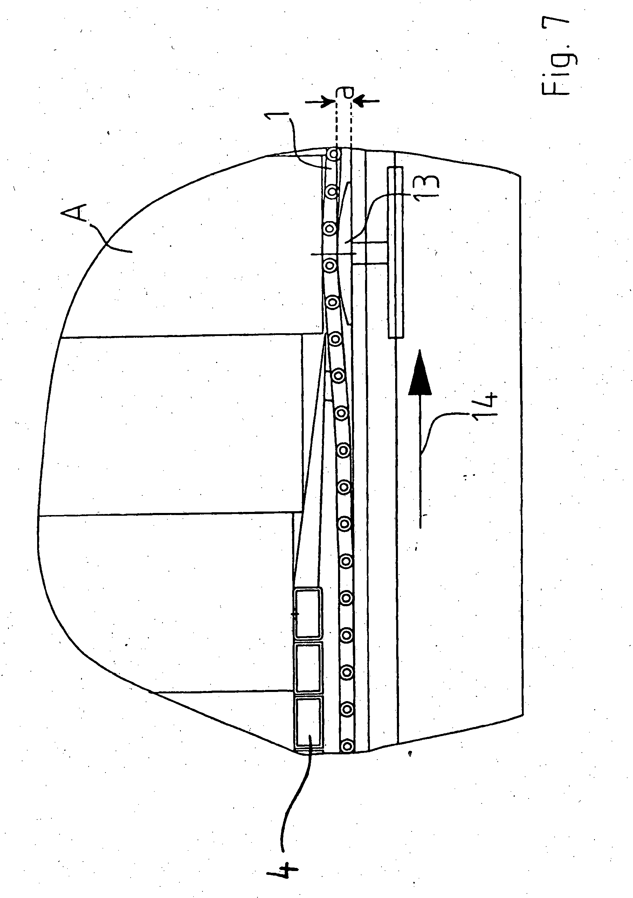

In den Fig. 6 und Fig. 7 ist die Unterlagehebeeinrichtung 13 über einen separaten Antrieb synchron mit der Transportfläche 4 verfahrbar.

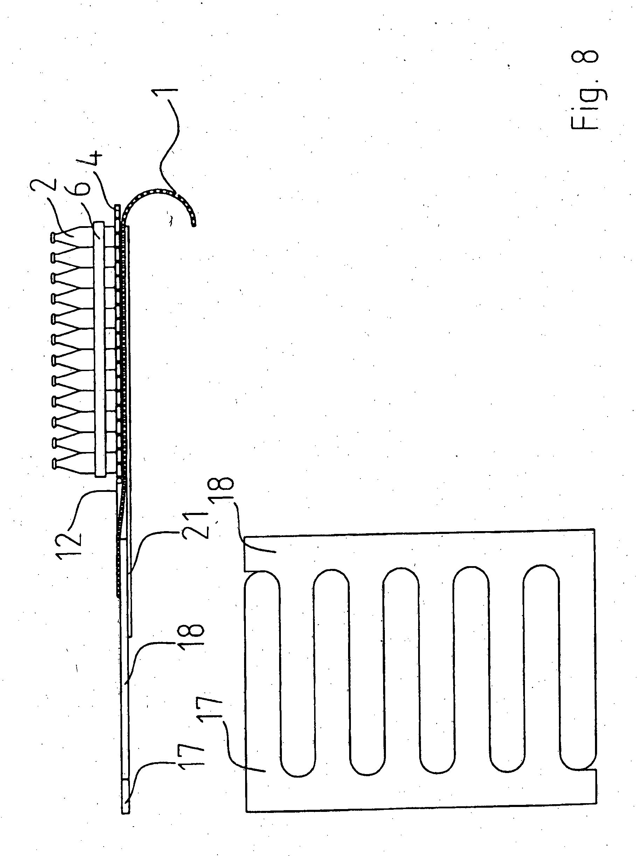

In den Fig. 8 bis Fig. 13 ist eine alternative Ausgestaltung einer Unterlagehebeeinrichtung 13 dargestellt. Bei diesem Ausführungsbeispiel besteht die Unterlagehebeeinrichtung 13 aus zwei in einer Ebene liegenden Flächenelementen 17, 18, wobei die jeweils aufeinander zuweisenden Kanten beider Flächenelemente 17, 18 kammerartig ausgebildet sind und versetzt zueinander angeordnete in der Ebene vorstehende Flächenteilbereiche 19, 20 aufweisen.

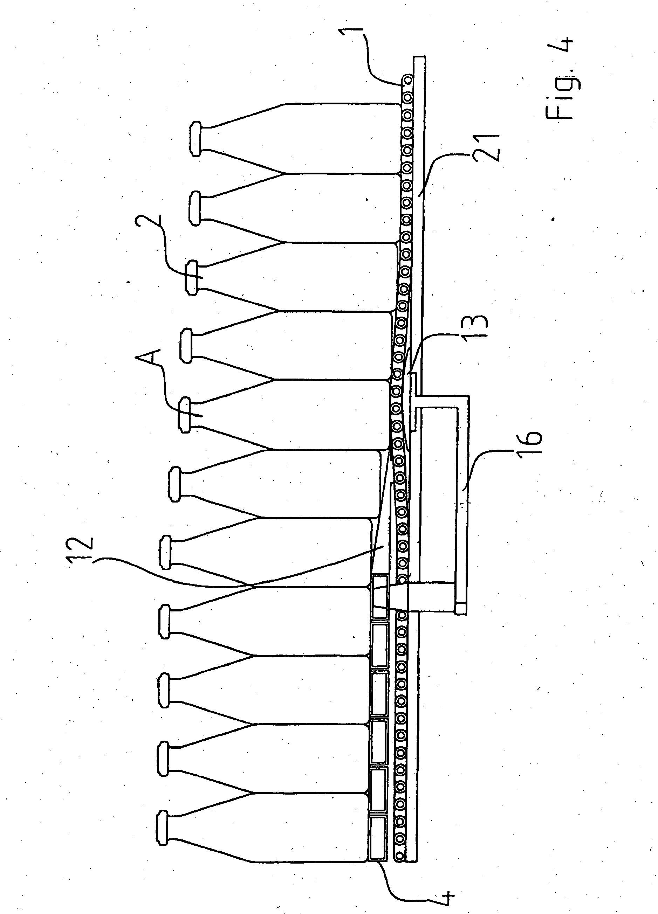

Im Gegensatz zu dem Ausführungsbeispiel nach den Fig. 4 bis Fig. 7, bei dem im Wesentlichen nur die Reihe A durch die Unterlagehebeeinrichtung 13 angehoben wird, befinden sich bei dem Ausführungsbeispiel nach den Fig. 8 bis Fig. 13 alle Behälter 2 auf der gleichen Höhe.

Die Flächenelemente 17, 18 liegen unterseitig auf einer Gleitschiene 21 auf. Das in diesen Figuren links dargestellte Flächenelement 17 ist dabei ortsfest, während das in diesen Figuren rechts dargestellte Flächenelement 18 synchron mit der Transportfläche 4 verlagerbar ist. Hierzu ist beispielsweise ein nicht dargestellter Antrieb vorgesehen.

Die Lage der beiden Flächenelemente 17, 18 zueinander ist in den Fig. 8 bis Fig. 11 jeweils in dem linken unteren Bereich der jeweiligen Figur in der Draufsicht dargestellt. Aus Vereinfachungsgründen ist in den Fig. 8 bis Fig. 11 das Förderband auf der Seite der Lage, die der Transportfläche 4 gegenüberliegend ist, nicht mehr dargestellt, so dass aufgrund dessen das unter dem Förderband befindliche Flächenelement 17 sichtbar ist.

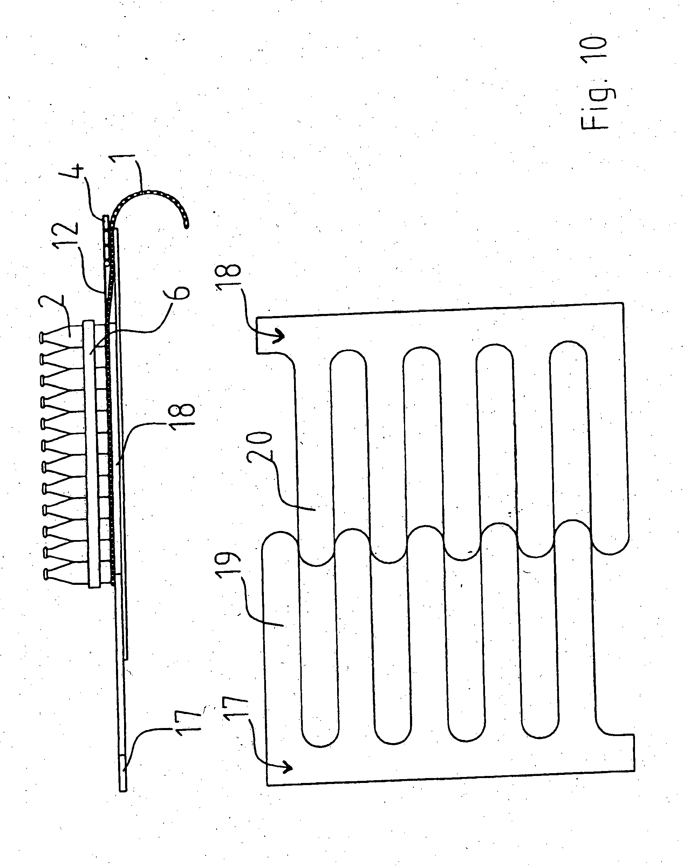

In Fig. 10 befinden sich die Flächenelemente 17, 18 in einer aneinander angrenzenden Position. Dann befindet sich die Transportfläche 4 auch noch nicht in ihrer Hebeposition. Die Breite der Flächenteilbereiche 19, 20 ist auf den Durchmesser der Behälter 2 abgestimmt. Je kleiner der Durchmesser der Behälter 2, desto geringer ist die Breite der Flächenteilbereiche 19, 20.

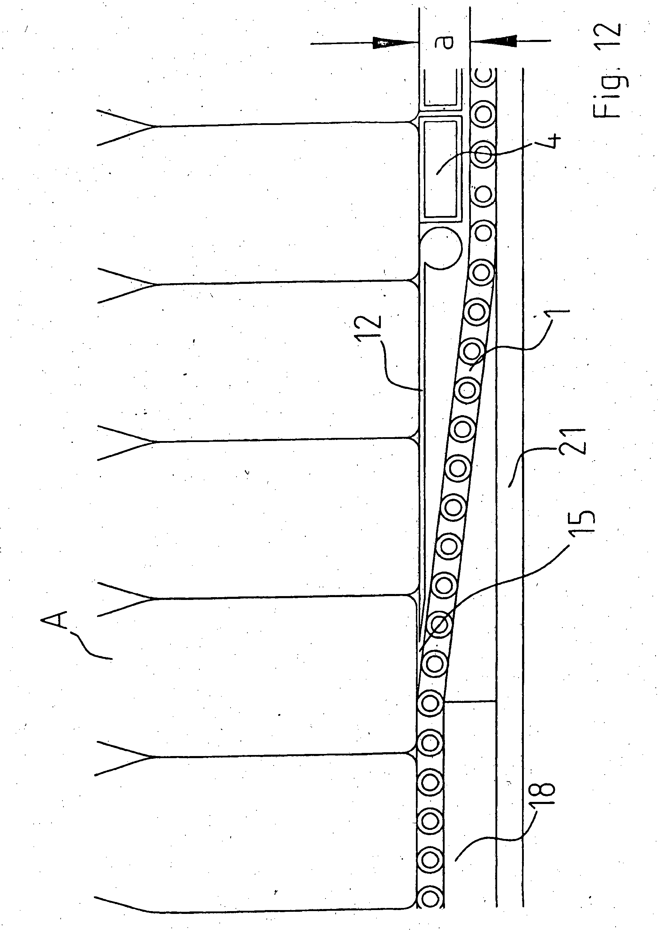

Wird die Transportfläche 4 zusammen mit dem rechten Flächenelement 18 in Richtung des linken Flächenelementes 17, d. h. in Unterführrichtung 14 bewegt, wird, wie in Fig. 12 dargestellt, bevor die Unterlage 1 heruntergeführt wird, ein Freiraum 15 zwischen den Böden der Behälter 2 der Reihe A und der Unterlage 1, unter die als nächstes die Transportfläche 4 verlagert wird, auf ihrer der Transportfläche 4 zugewandten Seite erzeugt. Damit kann die Transportfläche 4 unter die Behälter 2 dieser Reihe A geführt werden.

Dieser Freiraum 15 wird dadurch gebildet, dass das Förderband in diesem Bereich durch das Flächenelement 18 um die Höhe "a" abgesenkt wird. Das Absenken kann durch das Eigengewicht der Unterlage 1 begründet sein. Es ist aber auch durchaus möglich, dass durch eine nicht dargestellte Konstruktion, z. B. in Form einer Rollenanordnung, die Unterlage 1 nach unten gelenkt wird, wobei diese Konstruktion synchron in Unterführrichtung 14 mit der Transportfläche 4 verfahrbar ist.

In dem dargestellten Ausführungsbeispiel entspricht die Höhe "a" in etwa der Höhe der Transportfläche 4 und beträgt etwa 20 mm. In den Bereichen, in denen sich oberhalb des Förderbandes die Transportfläche 4 befindet, ist das Förderband in Kontakt mit der Gleitschiene 21 und damit um die Höhe "a" tiefer als die mit den Flächenelementen 17, 18, d. h. der Unterlagehebeeinrichtung 13, in Kontakt befindlichen Bereichen. Dies gilt auch für die Ausbildung der Unterlagehebeeinrichtung 13 nach den Fig. 2 bis Fig. 7.

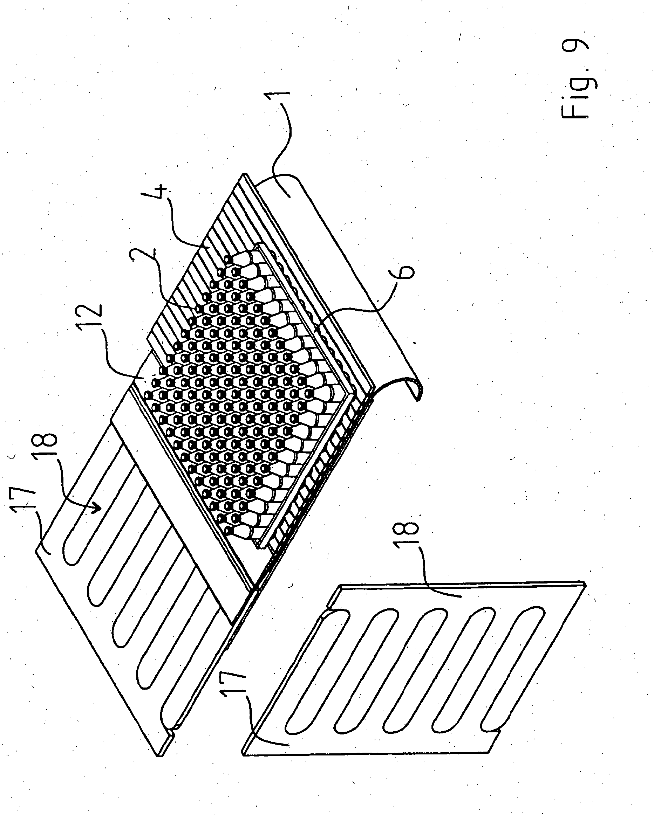

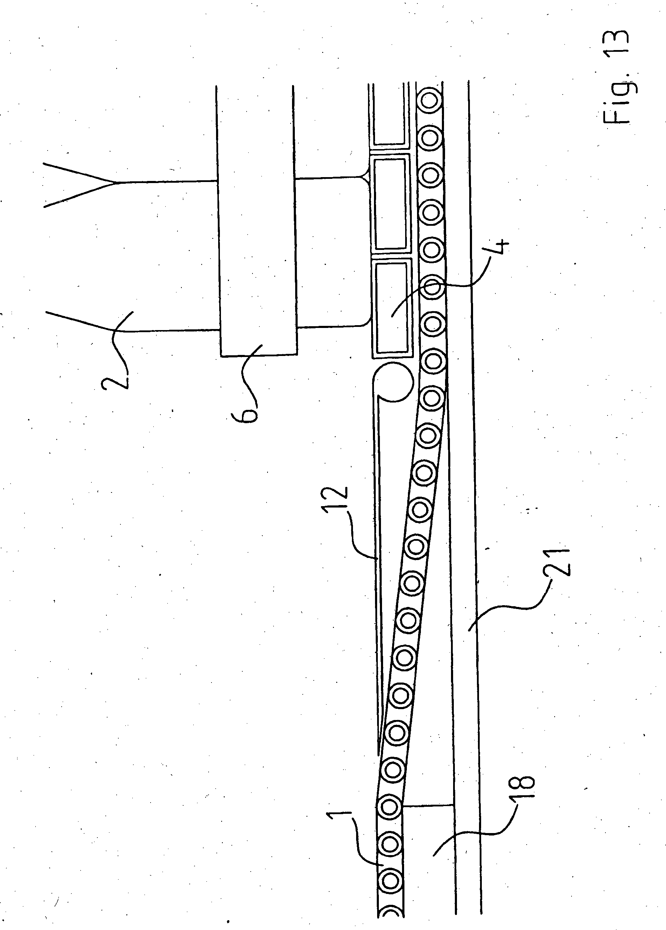

In den Fig. 9 und Fig. 13 befindet sich die Transportfläche 4 in ihrer Hebeposition, d. h. sie ist unter alle Behälter 2 dieser Lage untergeführt worden. Dann befinden sich die Flächenelemente 17, 18 auch in der ineinander eingeschobenen Position. Dann kann die Lage mittels der Hebeeinrichtung 3 angehoben werden.

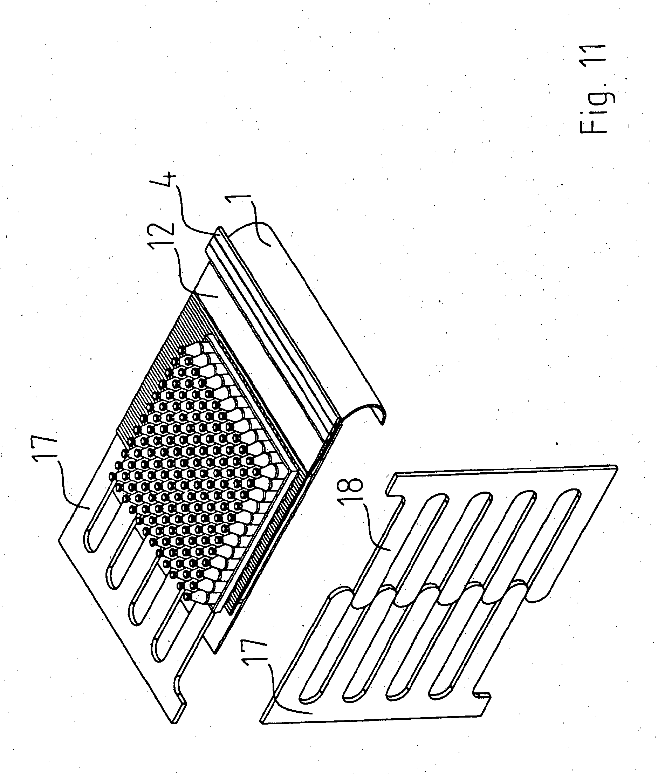

Nach Anheben der Lage durch die Hebeeinrichtung 3 wird das rechte Flächenelement 18 wieder in die in den Fig. 10 und Fig. 11 dargestellte Position verlagert. Dann wird wieder eine neue Lage an Behältern 2 auf der Unterlage 1 aufgestaut und die Hebeeinrichtung 3 mit dem Rahmen 5 um die Lage an Behältern 2 herum positioniert, wobei sich die Transportfläche 4 noch nicht in der Hebeposition befindet. Durch Verlagerung des rechten Flächenelementes 18 zusammen mit der Transportfläche 4 kann die Transportfläche 4 dann wieder unter die Lage untergeführt werden.

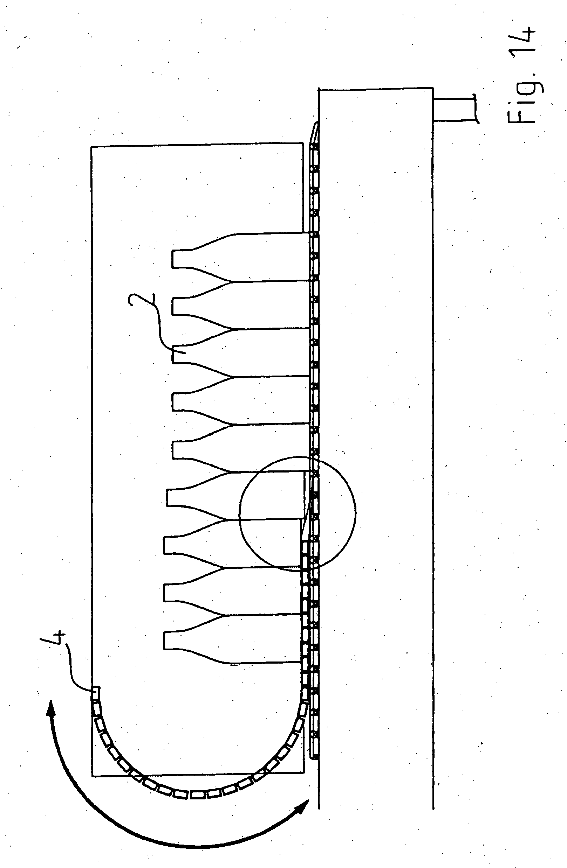

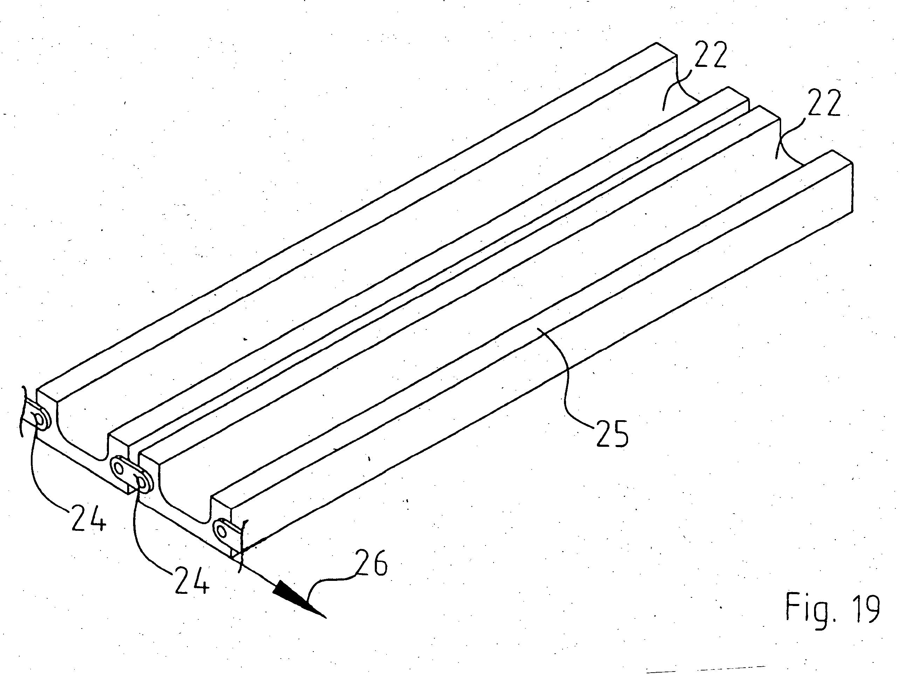

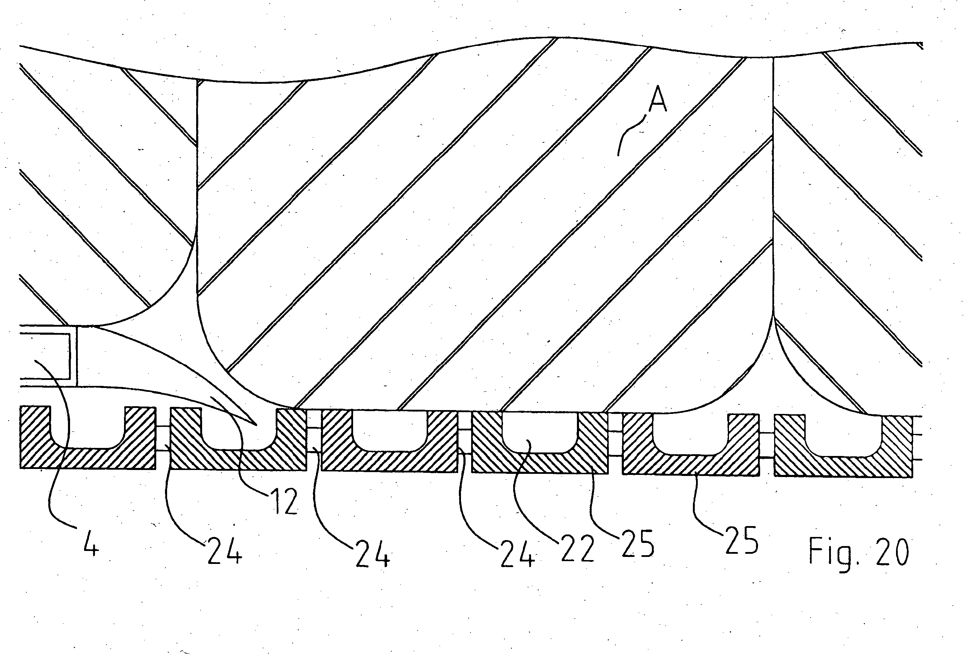

In den Fig. 14 bis Fig. 18 einerseits sowie den Fig. 19 und Fig. 20 andererseits sind Ausführungsformen dargestellt, bei der unter der Reihe A an Behältern 2, unter die als nächstes die Transportfläche 4 verlagert wird, zumindest auf ihrer der Transportfläche 4 zugewandten Seite bereits ein Freiraum 15 zwischen den Böden der Behälter 2 dieser Reihe A und der Unterlage 1 gegeben ist.

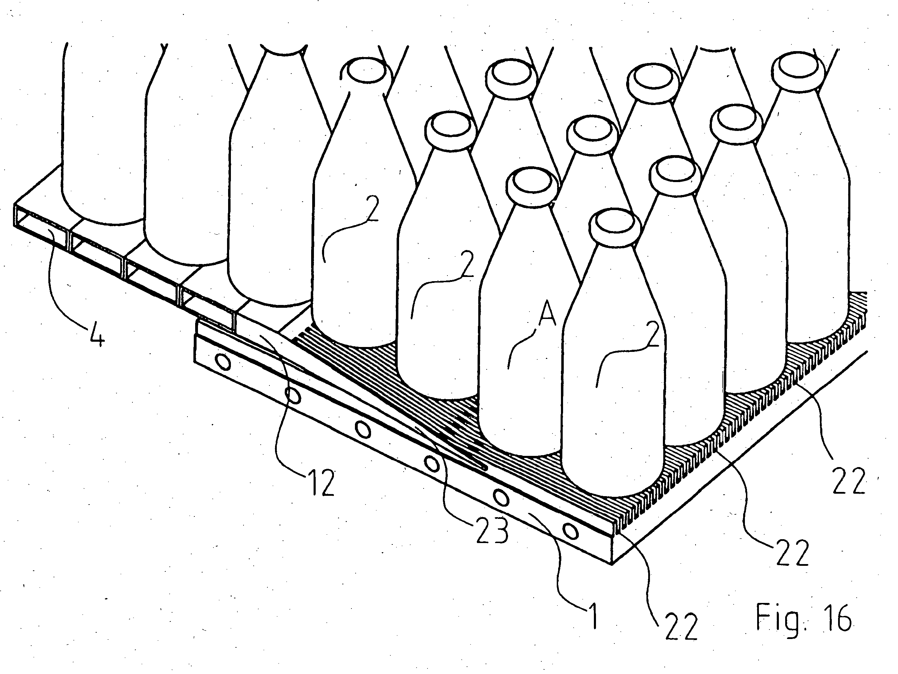

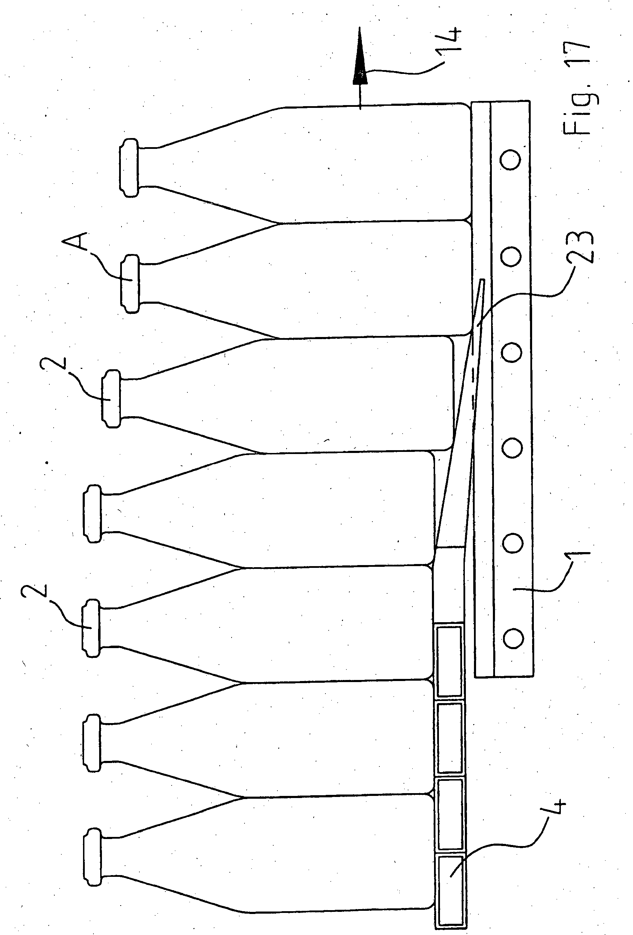

Hierzu weist bei der Ausführungsform nach den Fig. 14 bis Fig. 18 die Unterlage 1, d. h. das Förderband, auf seiner der Transportfläche 4 zugewandten Fläche parallel zur Unterführrichtung 14 ausgerichtete, rinnenartig ausgebildete Ausnehmungen 22 auf. Gleichzeitig weist die Transportfläche 4 an ihrer Vorderkante 12 in Unterführrichtung 14 gesehen kammartig ausgebildete Vorderkantenbereiche 23 auf, wobei jedem Vorderkantenbereich 23 eine Ausnehmung 22 zugeordnet ist. Die Vorderkantenbereiche 23 sind in die korrespondierende Ausnehmung 22 einbringbar und in dieser verlagerbar. Dies ist in der schrägen Draufsicht in Fig. 16 sowie in der Seitenansicht gemäß Fig. 17 deutlich erkennbar.

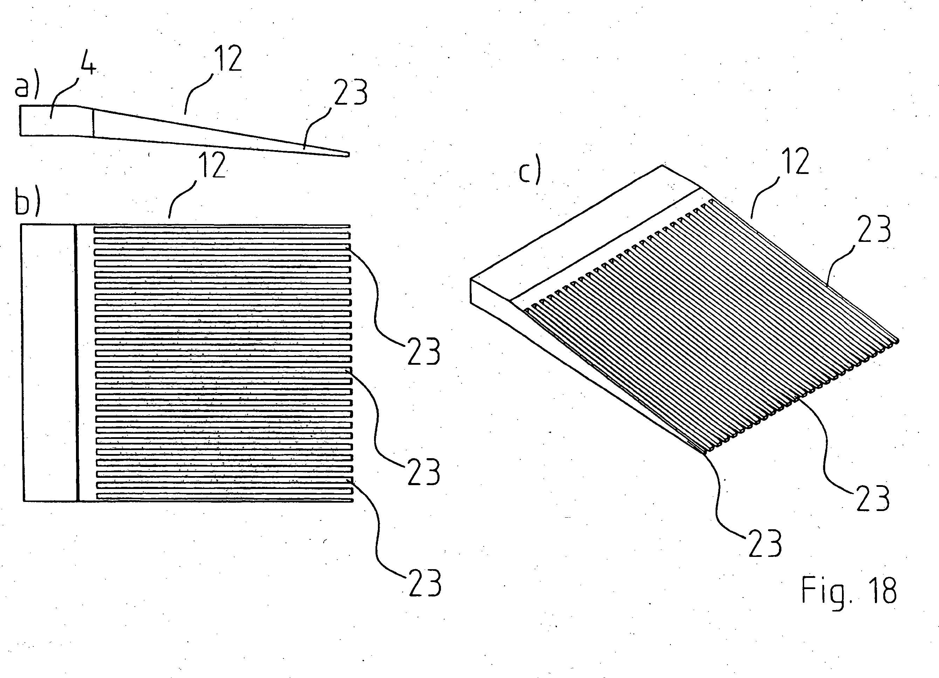

Der Abstand der Ausnehmungen 22 ist auf die Größe der anzuhebenden Behälter 2 abgestimmt. Bei dem in Fig. 16 dargestellten Ausführungsbeispiel sind unterhalb jedes Behälters 2 mehrere Ausnehmungen 22 vorgesehen. Durch Verlagerung der Transportfläche 4 in Unterführrichtung 14 kann aufgrund des Führens der Vorderkantenbereiche 23 in den Ausnehmungen 22 die Transportfläche 4 leicht unter die Lage untergeführt werden. Die Unterlage 1 kann bei dieser Ausführungsform auch ortsfest sein. In Fig. 18 ist die Vorderkante 12 der Transportfläche 4 aus verschiedenen Richtungen dargestellt. Deutlich erkennbar ist, dass die Vorderkante 12 schräg abwärts verlaufend ausgebildet ist, so dass die Höhe von den Vorderkantenbereichen 23 zu der Transportfläche 4 zunimmt.

Die Ausbildung der Unterlage 1 kann unterschiedlich sein. So kann die Unterlage 1 ortsfest sein, so dass dann bei Verlagerung der Transportfläche 4 eine Relativbewegung zwischen der Unterlage 1 und der Transportfläche 4 besteht.

Die Unterlage 1 kann aber auch verfahrbar ausgebildet sein, so dass bei Verlagerung der Transportfläche 4 die Unterlage 1 entweder in die gleiche oder in die entgegengesetzte Richtung mit der Transportfläche 4 bewegt wird.

So kann die Unterlage 1 nach den Fig. 14 bis Fig. 18 beispielsweise als Förderband ausgebildet sein, das aus in Verfahrrichtung gesehen bewegbaren, aus mehreren, durch senkrecht zur Verfahrrichtung ausgerichtete Achsen gelenkig über Glieder miteinander verbundenen Segmenten besteht.

Ein Segment kann über die ganze Breite der Unterlage 1 durchgehend ausgebildet sein. Es ist aber auch durchaus möglich, dass ein Segment über die Breite der Unterlage 1 gesehen aus mehreren Teilsegmenten besteht, die untereinander verbunden sind.

In den Fig. 19 und Fig. 20 ist die Unterlage 1 als in Verfahrrichtung 26 bewegbare, aus mehreren durch senkrecht zur Verfahrrichtung 26 ausgerichtete Achsen gelenkig über Glieder 24 miteinander verbundenen Segmenten 25 bestehende Förderfläche ausgebildet. Jedes Segment 25 weist oberseitig eine Ausnehmung 22, die als orthogonal zur Unterführrichtung 14 ausgebildete Nut ausgebildet ist, auf. Die Vorderkante 12 der Transportfläche 4 befindet sich beim Unterführen in einer Ausnehmung 22, so dass die Transportfläche 4 leicht unter die Reihe an Behältern 2 unterführbar ist. Bei dieser Ausführungsform darf keine Relativbewegung zwischen der Unterlage 1 und der Transportfläche 4 bestehen.

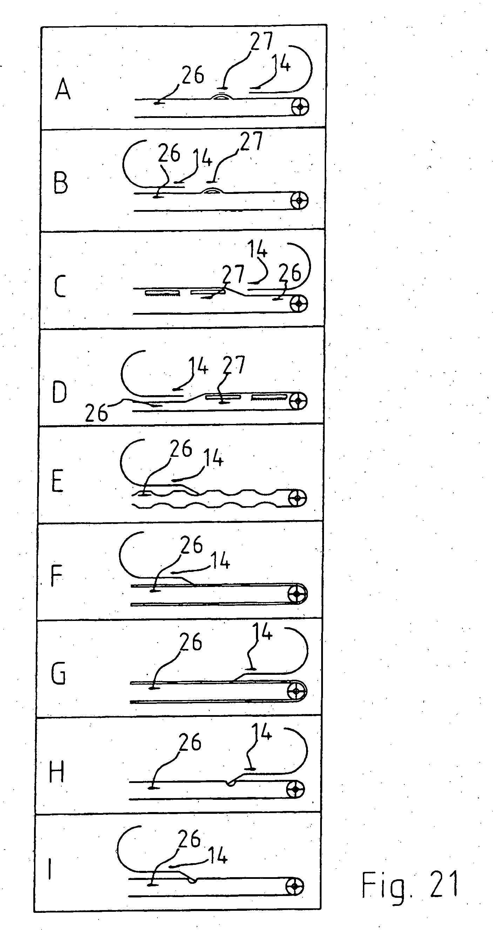

In Fig. 21 sind mögliche Bewegungsrichtungen dargestellt. Die Ausführungsform nach den Fig. 2 bis Fig. 7 ist in den Skizzen A und B dargestellt. So kann die Verfahrrichtung 26 der Unterlage 1 mit der Unterführrichtung 14 der Transportfläche 4 und der Verschieberichtung 27 der Unterlagehebeeinrichtung 13 identisch sein, was in Skizze B dargestellt ist.

Selbstverständlich kann die Verfahrrichtung 26 der Unterlage 1 entgegengesetzt zur Unterführrichtung 14 der Transportfläche 4 und der Verschieberichtung 27 der Unterlagehebeeinrichtung 13 sein.

In den Skizzen C und D sind mögliche Bewegungsrichtungen bei einer Unterlagehebeeinrichtung 13 bestehend aus zwei Flächenelementen 17, 18 dargestellt. Die Skizze C betrifft die Ausführungsform nach den Fig. 8 bis Fig. 13. In der Skizze D ist das rechte Flächenelement 18 ortsfest angeordnet, während das linke Flächenelement 17 verlagerbar ist. Dann ist die Unterführrichtung 14 der Transportfläche 4, die Verfahrrichtung 26 der Unterlage 1 sowie die Verschiebeeinrichtung 27 des Flächenelementes 17 gleich.

In Skizze E sind die Bewegungsrichtungen bei der Ausführungsform nach den Fig. 19 und Fig. 20 dargestellt.

Zu der Ausführungsform nach den Fig. 14 bis Fig. 18 sind die Bewegungsrichtungen in den Skizzen F und G dargestellt. Wie diesen zu entnehmen ist, kann die Unterführrichtung 14 der Transportfläche 4 sowohl in Verfahrrichtung 26 (Skizze F) als auch entgegen die Verfahrrichtung 26 (Skizze G) der Unterlage 1 sein.

In den Skizzen H und I ist ein Ausführungsbeispiel dargestellt, bei der die Unterlage 1 in dem Bereich, der zum einen an die Reihe an Behältern 2, unter die als nächstes die Transportfläche 4 verlagert wird, angrenzt und zum anderen der noch nicht untergeführten Transportfläche 4 zugewandt ist, "lokal" abgesenkt wird. Auch der "abgesenkte" Bereich wandert synchron mit der Transportfläche 4. Auch hier kann die Unterführrichtung 14 der Transportfläche 4 in (Skizze I) oder entgegengesetzt (Skizze H) der Verfahrrichtung 26 der Unterlage 1 sein.

Bei den in den Figuren dargestellten Ausführungsbeispielen wird die als Jalousie ausgebildete Transportfläche 4 in zwei im Abstand zueinander angeordneten U-förmig ausgebildeten Schienen geführt, die an der Hebeeinrichtung 3 befestigt sind. Der Abstand ist so gewählt, dass die Lage an Behältern 2 die Schienen nicht berührt. Aus Gründen insbesondere der Raumersparnis sind die Schienen endseitig nach oben oder, wie beispielsweise in den Fig. 8 bis Fig. 13 dargestellt, nach unten umgelenkt.

## Patentansprüche

1. Vorrichtung zum Anheben einer Lage, bestehend aus einer Vielzahl von Behältern (2) oder dergleichen, mit:
- einer Unterlage (1),
- einer Hebeeinrichtung (3), wobei die Hebeeinrichtung (3) eine parallel zur Unterlage (1) verfahrbare, insbesondere als Jalousie ausgebildete, Transportfläche (4) aufweist, und vorzugsweise auch mit einem derart ausgebildeten Rahmen (5), dass der Rahmen (5) durch Überstülpen um die Lage der Behälter (2) oder durch Einlaufen der Behälter (2) in den Rahmen (5) herumlegbar ist, wobei vor dem Anheben der Lage die Hebeeinrichtung (3) derart an die Lage heranbewegt wird, dass die noch nicht in ihre Hebeposition ausgefahrene Transportfläche (4) mit ihrer Vorderkante (12) vor der ersten Reihe (A) der Lage ist und dann unter die Lage in ihre Hebeposition durch Relativbewegung in Bezug auf die Behälter (2) unter die auf der Unterlage (1) stehenden Behälter (2) gefahren wird,
**dadurch gekennzeichnet,**
**dass** die Unterlage (1) zumindest in Verfahrrichtung (14, 26) flexibel ausgebildet ist,
**dass** eine Unterlagehebeeinrichtung (13) zum Anheben der Unterlage (1) vorgesehen ist, wobei die Unterlagehebeeinrichtung (13) als eine, vorzugsweise im Querschnitt zumindest in Unterführrichtung (14) gesehen seitlich abgeflachte, über die ganze Breite der Reihe erstreckende Erhöhung ausgebildet ist,
so dass die Unterlagehebeeinrichtung (13) in Unterführrichtung (14) gesehen in dem Bereich, der zum einen an die Reihe (A) an Behältern (2), unter die als nächstes die Transportfläche (4) verlagert wird, angrenzt und zum anderen der noch nicht untergeführten Transportfläche (4) zugewandt ist, in einem geringen Abstand vor der Vorderkante (12) der Transportfläche (4) angeordnet und synchron mit der in die Hebeposition verfahrbaren Transportfläche (4) verfahren werden kann, wobei die Unterlagehebeeinrichtung (13) über ein einen gleich bleibenden Abstand erzeugendes Verbindungselement (16) mit der Transportfläche (4) gekoppelt ist oder wobei die Unterlagehebeeinrichtung (13) über einen separaten Antrieb verfahrbar ist,
so dass unter jedem Behälter (2) zu jedem Zeitpunkt ein Teilbereich der Unterlage (1) befindlich ist und bei der Reihe (A) an Behältern (2), unter die als nächstes die Transportfläche (4) verlagert wird, zumindest auf ihrer der Transportfläche (4) zugewandeten Seite, bevor die Unterlage (1) heruntergeführt wird, ein Freiraum (15) zwischen den Böden der Behälter (2) dieser Reihe (A) und der Unterlage (1) erzeugt wird,
so dass die Transportfläche (4) unter die Behälter (2) dieser Reihe (A) geführt werden kann.

2. Vorrichtung zum Anheben einer Lage, bestehend aus einer Vielzahl von Behältern (2) oder dergleichen, mit:
- einer Unterlage (1),
- einer Hebeeinrichtung (3), wobei die Hebeeinrichtung (3) eine parallel zur Unterlage (1) verfahrbare, insbesondere als Jalousie ausgebildete, Transportfläche (4) aufweist, und vorzugsweise auch mit einem derart ausgebildeten Rahmen (5), dass der Rahmen (5) durch Überstülpen um die Lage der Behälter (2) oder durch Einlaufen der Behälter (2) in den Rahmen (5) herumlegbar ist, wobei vor dem Anheben der Lage die Hebeeinrichtung (3) derart an die Lage heranbewegt wird, dass die noch nicht in ihre Hebeposition ausgefahrene Transportfläche (4) mit ihrer Vorderkante (12) vor der ersten Reihe (A) der Lage ist und dann unter die Lage in ihre Hebeposition durch Relativbewegung in Bezug auf die Behälter (2) unter die auf der Unterlage (1) stehenden Behälter (2) gefahren wird,
**dadurch gekennzeichnet,**
**dass** die Unterlage (1) zumindest in Verfahrrichtung (14, 26) flexibel ausgebildet ist,
**dass** eine Unterlagehebeeinrichtung (13) zum Anheben der Unterlage (1) vorgesehen ist, wobei die Unterlagehebeeinrichtung (13) aus wenigstens zwei in einer Ebene liegenden Flächenelementen (17, 18) besteht, wobei die Flächenelemente (17, 18) in dieser Ebene relativ zueinander in eine ineinander eingeschobene Position einerseits und in eine aneinander angrenzende Position andererseits bewegbar sind, wobei die jeweils aufeinander zuweisenden Kanten der jeweiligen Flächenelemente (17, 18) kammartig ausgebildet sind und versetzt zueinander angeordnete in der Ebene vorstehende Flächenanteilbereiche (19, 20) aufweisen,
so dass das angrenzende Flächenelement (18) der Unterlagehebeeinrichtung (13) in Unterführrichtung (14) gesehen in dem Bereich, der zum einen an die Reihe (A) an Behältern (2), unter die als nächstes die Transportfläche (4) verlagert wird, angrenzt und zum anderen der noch nicht untergeführten Transportfläche (4) zugewandt ist, in einem geringen Abstand vor der Vorderkante (12) der Transportfläche (4) angeordnet und synchron mit der in die Hebeposition verfahrbaren Transportfläche (4) verfahren werden kann, wobei die Unterlagehebeeinrichtung (13) über ein einen gleich bleibenden Abstand erzeugendes Verbindungselement (16) mit der Transportfläche (4) gekoppelt ist oder wobei die Unterlagehebeeinrichtung (13) über einen separaten Antrieb verfahrbar ist,
so dass unter jedem Behälter (2) zu jedem Zeitpunkt ein Teilbereich der Unterlage (1) befindlich ist und bei der Reihe (A) an Behältern (2), unter die als nächstes die Transportfläche (4) verlagert wird, zumindest auf ihrer der Transportfläche (4) zugewandten Seite, bevor die Unterlage (1) heruntergeführt wird, ein Freiraum (15) zwischen den Böden der Behälter (2) dieser Reihe (A) und der Unterlage (1) erzeugt wird,
so dass die Transportfläche (4) unter die Behälter (2) dieser Reihe (A) geführt werden kann.

3. Vorrichtung nach einem der Ansprüche 1 oder 2, **dadurch gekennzeichnet, dass** die Unterlagehebeeinrichtung (13) absenkbar gelagert ist.

4. Vorrichtung zum Anheben einer Lage, bestehend aus einer Vielzahl von Behältern (2) oder dergleichen, mit:
- einer Unterlage (1),
- einer Hebeeinrichtung (3), wobei die Hebeeinrichtung (3) eine parallel zur Unterlage (1) verfahrbare, insbesondere als Jalousie ausgebildete, Transportfläche (4) aufweist, und vorzugsweise auch mit einem derart ausgebildeten Rahmen (5), dass der Rahmen (5) durch Überstülpen um die Lage der Behälter (2) oder durch Einlaufen der Behälter (2) in den Rahmen (5) herumlegbar ist, wobei vor dem Anheben der Lage die Hebeeinrichtung (3) derart an die Lage heranbewegt wird, dass die noch nicht in ihre Hebeposition ausgefahrene Transportfläche (4) mit ihrer Vorderkante (12) vor der ersten Reihe (A) der Lage ist und dann unter die Lage in ihre Hebeposition durch Relativbewegung in Bezug auf die Behälter (2) unter die auf der Unterlage (1) stehenden Behälter (2) gefahren wird, und
wobei die Transportfläche (4) an ihrer Vorderkante in Unterführrichtung (14) gesehen kammartig ausgebildete Vorderkantenbereiche (23) aufweist,
**dadurch gekennzeichnet,**
**dass** die Unterlage (1) auf ihrer der Transportfläche (4) zugewandten Fläche parallel zur Unterführrichtung (14) ausgerichtete, rinnenartig ausgebildete Ausnehmungen (22) aufweist, wobei jedem Vorderkantenbereich (23) eine Ausnehmung (22) zugeordnet ist, dass die Vorderkante (12) der Transportfläche (4) eine zum freien Ende hin nach unten zur Unterlage (1) schräg abwärts verlaufende Fläche aufweist,
so dass die Vorderkantenbereiche (23) bei Verlagerung der Transportfläche (4) in ihre Hebeposition in die korrespondierenden Ausnehmungen (22) einbringbar sind,
so dass unter jedem Behälter (2) zu jedem Zeitpunkt ein Teilbereich der Unterlage (1) befindlich ist und bei der Reihe (A) an Behältern (2), unter die als nächstes die Transportfläche (4) verlagert wird, die Vorderkantenbereiche (23) der Transportfläche (4) unter diese Reihe (A) an Behältern (2) geführt werden können.

5. Vorrichtung zum Anheben einer Lage, bestehend aus einer Vielzahl von Behältern (2) oder dergleichen, mit:
- einer Unterlage (1),
- einer Hebeeinrichtung (3), wobei die Hebeeinrichtung (3) eine parallel zur Unterlage (1) verfahrbare, insbesondere als Jalousie ausgebildete, Transportfläche (4) aufweist, und vorzugsweise auch mit einem derart ausgebildeten Rahmen (5), dass der Rahmen (5) durch Überstülpen um die Lage der Behälter (2) oder durch Einlaufen der Behälter (2) in den Rahmen (5) herumlegbar ist, wobei vor dem Anheben der Lage die Hebeeinrichtung (3) derart an die Lage heranbewegt wird, dass die noch nicht in ihre Hebeposition ausgefahrene Transportfläche (4) mit ihrer Vorderkante (12) vor der ersten Reihe (A) der Lage ist und dann unter die Lage in ihre Hebeposition durch Relativbewegung in Bezug auf die Behälter (2) unter die auf der Unterlage (1) stehenden Behälter (2) gefahren wird, und
**dadurch gekennzeichnet,**
**dass** die Unterlage (1) als in Verfahrrichtung (26) bewegbare, aus mehreren, durch senkrecht zur Verfahrrichtung (26) ausgerichtete Achsen gelenkig miteinander verbundenen Segmenten (25) bestehende, Förderfläche ausgebildet ist, wobei jedes Segment (25) oberseitig eine Ausnehmung (22) aufweist, die als orthogonal zur Unterführrichtung (14) ausgerichtete Nut ausgebildet ist,
und **dass** die Vorderkante (12) der Transportfläche (4) eine zum freien Ende hin nach unten zur Unterlage (1) schräg abwärts verlaufende Fläche aufweist,
so dass die Vorderkante (12) bei Verlagerung der Transportfläche (4) in ihre Hebeposition in die Ausnehmung (22) einbringbar ist, wobei zwischen der Unterlage (1) und der Transportfläche (4) keine Relativbewegung besteht,
so dass unter jedem Behälter (2) zu jedem Zeitpunkt ein Teilbereich der Unterlage (1) befindlich ist und bei der Reihe (A) an Behältern (2), unter die als nächstes die Transportfläche (4) verlagert wird, die Vorderkante (12) der Transportfläche (4) in die Ausnehmung (22) unter die noch auf der Unterlage (1) stehenden Behälter (2) dieser Reihe (A) geführt werden können.

6. Vorrichtung nach einem der Ansprüche 4 oder 5, **dadurch gekennzeichnet, dass** die Unterlage (1) zumindest in Verfahrrichtung (14, 26) flexibel ausgebildet ist.

7. Verfahren zum Anheben einer Lage, bestehend aus einer Vielzahl von Behältern (2) oder dergleichen, mittels einer Vorrichtung nach Anspruch 1:
- wobei vor dem Anheben der Lage die Hebeeinrichtung (3) derart an die Lage heranbewegt wird, und vorzugsweise der Rahmen (5) durch Überstülpen um die Lage der Behälter (2) oder durch Einlaufen der Behälter (2) in den Rahmen (5) herumgelegt wird,
- wobei die noch nicht in ihre Hebeposition ausgefahrene Transportfläche (4) mit ihrer Vorderkante (12) vor der ersten Reihe (A) der Lage ist und dann unter die Lage in ihre Hebeposition durch Relativbewegung in Bezug auf die Behälter (2) unter die auf der Unterlage (1) stehenden Behälter (2) gefahren wird,
- wobei die Unterlagehebeeinrichtung (13) in Unterführrichtung (14) gesehen in dem Bereich, der zum einen an die Reihe (A) an Behältern (2), unter die als nächstes die Transportfläche (4) verlagert wird, angrenzt und zum anderen der noch nicht untergeführten Transportfläche (4) zugewandt ist, in einem geringen Abstand vor der Vorderkante (12) der Transportfläche (4) angeordnet und synchron mit der in die Hebeposition verfahrbaren Transportfläche (4) verfahren wird, so dass unter jedem Behälter (2) zu jedem Zeitpunkt ein Teilbereich der Unterlage (1) befindlich ist und bei der Reihe (A) an Behältern (2), unter die als nächstes die Transportfläche (4) verlagert wird, zumindest auf ihrer der Transportfläche (4) zugewandten Seite, bevor die Unterlage (1) heruntergeführt wird, ein Freiraum (15) zwischen den Böden der Behälter (2) dieser Reihe (A) und der Unterlage (1) erzeugt wird und die Transportfläche (4) unter die Behälter (2) dieser Reihe (A) geführt wird.

8. Verfahren zum Anheben einer Lage, bestehend aus einer Vielzahl von Behältern (2) oder dergleichen, mittels einer Vorrichtung nach Anspruch 2:
- wobei vor dem Anheben der Lage die Hebeeinrichtung (3) derart an die Lage heranbewegt wird, und vorzugsweise der Rahmen (5) durch Überstülpen um die Lage der Behälter (2) oder durch Einlaufen der Behälter (2) in den Rahmen (5) herumgelegt wird,
- wobei die noch nicht in ihre Hebeposition ausgefahrene Transportfläche (4) mit ihrer Vorderkante (12) vor der ersten Reihe (A) der Lage ist und dann unter die Lage in ihre Hebeposition durch Relativbewegung in Bezug auf die Behälter (2) unter die auf der Unterlage (1) stehenden Behälter (2) gefahren wird,
- wobei das angrenzende Flächenelement (18) der Unterlagehebeeinrichtung (13) in Unterführrichtung (14) gesehen in dem Bereich, der zum einen an die Reihe (A) an Behältern (2), unter die als nächstes die Transportfläche (4) verlagert wird, angrenzt und zum anderen der noch nicht untergeführten Transportfläche (4) zugewandt ist, in einem geringen Abstand vor der Vorderkante (12) der Transportfläche (4) angeordnet und synchron mit der in die Hebeposition verfahrbaren Transportfläche (4) verfahren wird, so dass unter jedem Behälter (2) zu jedem Zeitpunkt ein Teilbereich der Unterlage (1) befindlich ist und bei der Reihe (A) an Behältern (2), unter die als nächstes die Transportfläche (4) verlagert wird, zumindest auf ihrer der Transportfläche (4) zugewandten Seite, bevor die Unterlage (1) heruntergeführt wird, ein Freiraum (15) zwischen den Böden der Behälter (2) dieser Reihe (A) und der Unterlage (1) erzeugt wird, und die Transportfläche (4) unter die Behälter (2) dieser Reihe (A) geführt wird.

9. Verfahren zum Anheben einer Lage, bestehend aus einer Vielzahl von Behältern (2) oder dergleichen, mittels einer Vorrichtung nach Anspruch 4:
- wobei vor dem Anheben der Lage die Hebeeinrichtung (3) derart an die Lage heranbewegt wird, und vorzugsweise der Rahmen (5) durch Überstülpen um die Lage der Behälter (2) oder durch Einlaufen der Behälter (2) in den Rahmen (5) herumgelegt wird,
- wobei die noch nicht in ihre Hebeposition ausgefahrene Transportfläche (4) mit ihrer Vorderkante (12) vor der ersten Reihe (A) der Lage ist und die Vorderkantenbereiche (23) in die korrespondierenden Ausnehmungen (22) eingebracht sind, und dann unter die Lage in ihre Hebeposition durch Relativbewegung in Bezug auf die Behälter (2) unter die auf der Unterlage (1) stehenden Behälter (2) gefahren wird, so dass unter jedem Behälter (2) zu jedem Zeitpunkt ein Teilbereich der Unterlage (1) befindlich ist und bei der Reihe (A) an Behältern (2), unter die als nächstes die Transportfläche (4) verlagert wird, die Vorderkantenbereiche(23) der Transportfläche (4) in die korrespondierenden Ausnehmungen (22) unter diese Reihe (A) an Behältern geführt werden.

10. Verfahren zum Anheben einer Lage, bestehend aus einer Vielzahl von Behältern (2) oder dergleichen, mittels einer Vorrichtung nach Anspruch 5:
- wobei vor dem Anheben der Lage die Hebeeinrichtung (3) derart an die Lage heranbewegt wird, und vorzugsweise der Rahmen (5) durch Überstülpen um die Lage der Behälter (2) oder durch Einlaufen der Behälter (2) in den Rahmen (5) herumgelegt wird,
- wobei die noch nicht in ihre Hebeposition ausgefahrene Transportfläche (4) mit ihrer Vorderkante (12) vor der ersten Reihe (A) der Lage ist und die Vorderkante (12) sich in einer Ausnehmung (22) der Unterlage (1) und dann die Transportfläche (4) unter die Lage in ihre Hebeposition durch Relativbewegung in Bezug auf die Behälter (2) und ohne Relativbewegung in Bezug auf die Unterlage (1) unter die auf der Unterlage (1) stehenden Behälter (2) gefahren wird, so dass unter jedem Behälter (2) zu jedem Zeitpunkt ein Teilbereich der Unterlage (1) befindlich ist und bei der Reihe (A) an Behältern (2), unter die als nächstes die Transportfläche (4) verlagert wird, die Vorderkante (12) der Transportfläche (4) sich in die Ausnehmung (22) unter diese Reihe (A) an Behältern befindet.

## Claims

1. A device for lifting a layer, comprising a plurality of containers (2) or suchlike, with:
- a support (1),
- a lifting device (3), wherein the lifting device (3) comprises a transport area (4) traversable parallel to the support (1) and constituted in particular as a blind, and preferably also with a frame (5) constituted in such a way that the frame (5) can be placed around the layer of containers (2) by being pulled over or by feeding the containers (2) into the frame (5), wherein the lifting device (3) is advanced towards the layer before the lifting of the layer in such a way that the transport area (4) not yet extended into its lifting position lies, with its front edge (12), in front of the first row (A) of the layer and is then traversed under the layer into its lifting position by a relative movement in respect of the containers (2) under the containers (2) standing on the support (1),
**characterised in that**
the support (1) is constituted flexibly at least in the traversing direction (14, 26),
that a support lifting device (13) is provided for lifting the support (1), wherein the support lifting device (13) is constituted as an elevation extending over the entire width of the row and preferably flattened off laterally in cross-section at least as viewed in the feed-under direction (14),
so that the support lifting device (13), viewed in the feed-under direction (14), can be disposed at a small distance in front of the front edge (12) of the transport area (4) in the region which on the one hand is adjacent to the row (A) of containers (2), under which the transport area (4) is next displaced, and which on the other hand is facing the not yet fed-under transport area (4) and can be traversed in synchrony with the transport area (4) traversable into the lifting position, wherein the support lifting device (13) is coupled to the transport area (4) by a connecting element (16) which produces a constant spacing or wherein the support lifting device (13) can be traversed by means of a separate drive,
so that a sub-region of the support (1) is at all times located beneath each container (2) and, at the row (A) of containers (2) under which the transport area (4) is next displaced, a free space (15) is produced between the bases of the containers (2) of this row (A) and the support (1) at least on their side facing the transport area (4), before the support (1) is fed under, so that the transport area (4) can be fed under the containers (2) of this row (A).

2. A device for lifting a layer, comprising a plurality of containers (2) or suchlike, with:
- a support (1),
- a lifting device (3), wherein the lifting device (3) comprises a transport area (4) traversable parallel to the support (1) and constituted in particular as a blind, and preferably also with a frame (5) constituted in such a way that the frame (5) can be placed around the layer of containers (2) by being pulled or by feeding the containers (2) into the frame (5), wherein the lifting device (3) is advanced towards the layer before the lifting of the layer in such a way that the transport area (4) not yet extended into its lifting position lies, with its front edge (12), in front of the first row (A) of the layer and is then traversed under the layer into its lifting position by a relative movement in respect of the containers (2) under the containers (2) standing on the support (1),
**characterised in that**
the support (1) is constituted flexibly at least in the traversing direction (14, 26),
that a support lifting device (13) is provided for lifting the support (1), wherein the support lifting device (13) comprises at least two planar elements (17, 18) lying in a plane, wherein the planar elements (17, 18) can be moved relative to one another in this plane into a position pushed into one another on the one hand and into a position adjacent to one another on the other hand, wherein the edges of the respective planar elements (17, 18) each pointing towards one another are constituted comb-like and comprise planar sub-regions (19, 20) projecting in the plane and disposed offset with respect to one another,
so that the adjacent planar element (18) of the support lifting device (13), viewed in the feed-under direction (14), can be disposed at a small distance in front of the front edge (12) of the transport area (4) in the region which on the one hand is adjacent to the row (A) of containers (2), under which the transport area (4) is next displaced, and which on the other hand is facing the not yet fed-under transport area (4) and can be traversed in synchrony with the transport area (4) traversable into the lifting position, wherein the support lifting device (13) is coupled to the transport area (4) by a connecting element (16) which produces a constant spacing and wherein the support lifting device (13) can be traversed by means of a separate drive,
so that a sub-region of the support (1) is at all times located beneath each container (2) and, at the row (A) of containers (2), under which the transport area (4) is next displaced, a free space (15) is produced between the bases of the containers (2) of this row (A) and the support (1) at least on their side facing the transport area (4), before the support (1) is fed under, so that the transport area (4) can be fed under the containers (2) of this row (A).

3. The device according to any one of claims 1 or 2, **characterised in that** the support lifting device (13) is mounted in a lowerable manner.

4. A device for lifting a layer, comprising a plurality of containers (2) or suchlike, with:
- a support (1),
- a lifting device (3), wherein the lifting device (3) comprises a transport area (4) traversable parallel to the support (1) and constituted in particular as a blind, and preferably also with a frame (5) constituted in such a way that the frame (5) can be placed around the layer of containers (2) by being pulled over or by feeding the containers (2) into the frame (5), wherein the lifting device (3) is advanced towards the layer before the lifting of the layer in such a way that the transport area (4) not yet extended into its lifting position lies, with its front edge (12), in front of the first row (A) of the layer and is then traversed under the layer into its lifting position by a relative movement in respect of the containers (2) under the containers (2) standing on the support (1),
wherein the transport area (4), at its front edge viewed in the feed-under direction (14), comprises front edge regions (23) constituted comb-like,
**characterised in that**
the support (1) comprises on its surface facing the transport area (4) recesses (22) constituted groove-like orientated parallel to the feed-under direction (14), wherein a recess (22) is assigned to each front edge region (23), that the front edge (12) of the transport area (4) comprises at the free end a face running obliquely downwards towards the support (1),
so that the front edge regions (23) can be introduced into the corresponding recesses (22) when the transport area (4) is displaced into its lifting position,
so that a sub-region of the support (1) is at all times located beneath each container (2) and, at the row (A) of containers (2), under which the transport area (4) is next displaced, the front edge regions (23) of the transport area (4) can be fed under this row (A) of containers (2).

5. A device for lifting a layer, comprising a plurality of containers (2) or suchlike, with:
- a support (1),
- a lifting device (3), wherein the lifting device (3) comprises a transport area (4) traversable parallel to the support (1) and constituted in particular as a blind, and preferably also with a frame (5) constituted in such a way that the frame (5) can be placed around the layer of containers (2) by being pulled over or by feeding the containers (2) into the frame (5), wherein the lifting device (3) is advanced towards the layer before the lifting of the layer in such a way that the transport area (4) not yet extended into its lifting position lies, with its front edge (12), in front of the first row (A) of the layer and is then traversed under the layer into its lifting position by a relative movement in respect of the containers (2) under the containers (2) standing on the support (1),
**characterised in that**
the support (1) is constituted as a conveying surface movable in the traversing direction (26) and comprising a plurality of segments (25) connected to one another in an articulated manner by axes orientated normal to the traversing direction (26), wherein each segment (25) comprises a recess (22) on the upper side, said recess being constituted as a groove orientated at right angles to the feed-under direction (14),
and that the front edge (12) of the transport area (4) comprises at the free end a face running obliquely downwards towards the support (1),
so that the front edge (12) can be introduced into the recess (22) when the transport area (4) is displaced into its lifting position, wherein no relative movement is present between the support (1) and the transport area (4),
so that a sub-region of the support (1) is at all times located beneath each container (2) and, at the row (A) of containers (2) under which the transport area (4) is next displaced, the front edge (12) of the transport area (4) can be fed into the recess (22) under the containers (2) of this row (A) that are still on the support (1).

6. The device according to any one of claims 4 or 5, **characterised in that** the support (1) is constituted flexibly at least in the traversing direction (14, 26).

7. A method for lifting a layer, comprising a plurality of containers (2) or suchlike, by means of a device according to claim 1:
- wherein the lifting device (3) is advanced towards the layer before the lifting of the layer, and preferably the frame (5) is placed around the layer of containers (2) by being pulled over or by feeding the containers (2) into the frame (5),
- wherein the transport area (4) not yet extended into its lifting position lies, with its front edge (12), in front of the first row (A) of the layer and is then traversed under the layer into its lifting position by a relative movement in respect of the containers (2) under the containers (2) standing on the support (1),
- wherein the support lifting device (13), viewed in the feed-under direction (14), is disposed at a small distance in front of the front edge (12) of the transport area (4) in the region which on the one hand is adjacent to the row (A) of containers (2), under which the transport area (4) is next displaced, and which on the other hand is facing the not yet fed-under transport area (4) and is traversed in synchrony with the transport area (4) traversable into the lifting position, so that a sub-region of the support (1) is at all times located beneath each container (2) and, at the row (A) of containers (2) under which the transport area (4) is next displaced, a free space (15) is produced between the bases of the containers (2) of this row (A) and the support (1) at least on their side facing the transport area (4), before the support (1) is fed under, and the transport area (4) is fed under the containers (2) of this row (A).

8. A method for lifting a layer, comprising a plurality of containers (2) or suchlike, by means of a device according to claim 2:
- wherein the lifting device (3) is advanced towards the layer before the lifting of the layer, and preferably the frame (5) is placed around the layer of containers (2) by being pulled over or by feeding the containers (2) into the frame (5),
- wherein the transport area (4) not yet extended into its lifting position lies, with its front edge (12), in front of the first row (A) of the layer and is then traversed under the layer into its lifting position by a relative movement in respect of the containers (2) under the containers (2) standing on the support (1),
- wherein the adjacent planar element (18) of the support lifting device (13), viewed in the feed-under direction (14), is disposed at a small distance in front of the front edge (12) of the transport area (4) in the region which on the one hand is adjacent to the row (A) of containers (2), under which the transport area (4) is next displaced, and which on the other hand is facing the not yet fed-under transport area (4) and is traversed in synchrony with the transport area (4) traversable into the lifting position, so that a sub-region of the support (1) is at all times located beneath each container (2) and, at the row (A) of containers (2) under which the transport area (4) is next displaced, a free space (15) is produced between the bases of the containers (2) of this row (A) and the support (1) at least on their side facing the transport area (4), before the support (1) is fed under, and the transport area (4) is fed under the containers (2) of this row (A).

9. A method for lifting a layer, comprising a plurality of containers (2) or suchlike, by means of a device according to claim 4:
- wherein the lifting device (3) is advanced towards the layer before the lifting of the layer, and preferably the frame (5) is placed around the layer of containers (2) by being pulled over or by feeding the containers (2) into the frame (5),
- wherein the transport area (4) not yet extended into its lifting position lies, with its front edge (12), in front of the first row (A) of the layer and the front edge regions (23) are introduced into the corresponding recesses (22), and is then traversed under the layer into its lifting position by a relative movement in respect of the containers (2) under the containers (2) standing on the support (1), so that a sub-region of the support (1) is at all times located beneath each container (2) and, at the row (A) of containers (2) under which the transport area (4) is next displaced, the front edge regions (23) of the transport area (4) are fed into the corresponding recesses (22) under this layer (A) of containers.

10. A method for lifting a layer, comprising a plurality of containers (2) or suchlike, by means of a device according to claim 5:
- wherein the lifting device (3) is advanced towards the layer before the lifting of the layer, and preferably the frame (5) is placed around the layer of containers (2) by being pulled over or by feeding the containers (2) into the frame (5),
- wherein the transport area (4) not yet extended into its lifting position lies, with its front edge (12), in front of the first row (A) of the layer and the front edge (12) is located in a recess (22) of the support (1) and then the transport area (4) is traversed under the layer into its lifting position by a relative movement in respect of the containers (2) or without a relative movement in respect of the support (1) under the containers (2) standing on the support (1), so that a sub-region of the support (1) is at all times located beneath each container (2) and, at the row (A) of containers (2) under which the transport area (4) is next displaced, the front edge (12) of the transport area (4) is located in the recess (22) under this layer (A) of containers.

## Revendications

1. Dispositif destiné à soulever une couche, constituée d'une pluralité de contenants (2) ou similaires, avec
- une base (1),
- un système de levage (3), le système de levage (3) comportant une surface de transport (4) déplaçable à la parallèle de la base (1), notamment conçue en tant que store à lamelles et de préférence aussi avec un cadre (5) conçu de telle façon que, par retournement autour la couche de contenants (2) ou par introduction des contenants (2) dans le cadre (5), le cadre (5) puisse être posé autour, avant le soulèvement de la couche, le système de levage (3) étant rapproché de la couche, de telle sorte que la surface de transport (4) qui n'est pas encore sortie dans sa position de levage se trouve avec son arête antérieure (12) devant la première rangée (A) de la couche et soit ensuite poussée sous la couche dans sa position de levage, par déplacement relatif par rapport aux contenants (2), sous les contenants (2) posés sur la base (1),
**caractérisé en ce que**
au moins dans la direction de déplacement (14, 26), la base (1) est conçue en étant souple,
**en ce qu'**il est prévu un système de levage de la base (13) pour soulever la base (1), le système de levage de la base (13) étant conçu en tant qu'une surélévation de préférence aplatie latéralement dans la section transversale, au moins vue dans la direction de passage inférieur (14), s'étendant sur toute la largeur de la rangée,
de sorte que, vu dans la direction de passage inférieur (14), dans la zone qui d'une part est adjacente à la rangée (A) de contenants (2), sous lesquels la surface de transport (4) est d'abord déplacée et qui d'autre part fait face à la surface de transport (4) qui n'est pas encore passée en dessous, le système de levage de la base (13) soit placé à une faible distance à l'avant de l'arête antérieure (12) de la surface de transport (4) et puisse être déplacé de manière synchrone avec la surface de transport (4) déplaçable dans la position de levage, le système de levage de la base (13) étant accouplé à la surface de transport (4) par l'intermédiaire d'un élément de liaison (16) créant une distance constante ou le système de levage de la base (13) étant déplaçable par l'intermédiaire d'un entraînement séparé,
de sorte que sous chaque contenant (2) se trouve à chaque instant une zone partielle de la base (1) et sur la rangée (A) de contenants (2) sous laquelle on déplace par la suite la surface de transport (4), au moins sur son côté faisant face à la surface de transport (4), avant le passage sous la base (1), un espace libre (15) soit créé entre les fonds inférieurs des contenants (2) de ladite rangée (A) et la base (1), de sorte que la surface de transport (4) puisse être guidée sous les contenants (2) de ladite rangée (A).

2. Dispositif destiné à soulever une couche, constituée d'une pluralité de contenants (2) ou similaires, avec
- une base (1),
- un système de levage (3), le système de levage (3) comportant une surface de transport (4) déplaçable à la parallèle de la base (1), notamment conçue en tant que store à lamelles et de préférence aussi avec un cadre (5) conçu de telle façon que, par retournement autour la couche de contenants (2) ou par introduction des contenants (2) dans le cadre (5), le cadre (5) peut être posé autour, avant le soulèvement de la couche, le système de levage (3) étant rapproché de la couche, de telle sorte que la surface de transport (4) qui n'est pas encore sortie dans sa position de levage se trouve avec son arête antérieure (12) devant la première rangée (A) de la couche et soit ensuite poussée sous la couche dans sa position de levage, par déplacement relatif par rapport aux contenants (2) sous les contenants (2) posés sur la base (1),
**caractérisé en ce que**
au moins dans la direction de déplacement (14, 26), la base (1) est conçue en étant souple,
**en ce qu'**il est prévu un système de levage de la base (13) pour soulever la base (1), le système de levage de la base (13) étant constitué d'au moins deux éléments plats (17, 18) situés dans un plan, dans ledit plan, les éléments plats (17, 18) étant déplaçables d'une part l'un par rapport à l'autre dans une position imbriquée et d'autre part dans une position mutuellement adjacente, les arêtes se faisant mutuellement face de chacun des éléments plats (17, 18) étant conçues à la manière de peignes et comportant des zones partielles plates (19, 20) placées avec un déport mutuel et débordant dans le plan,
de sorte que, vu dans la direction de passage inférieur (14), dans la zone qui d'une part est adjacente à la rangée (A) de contenants (2) sous lesquels on va déplacer par la suite la surface de transport (4) et qui d'autre part fait face à la surface de transport (4) sous laquelle rien n'est encore passé, l'élément plat (18) adjacent du système de levage de la base (13) soit placé à une faible distance à l'avant de l'arête antérieure (12) de la surface de transport (4) et puisse être déplacé de manière synchrone avec la surface de transport (4) déplaçable dans la position de levage, le système de levage de la base (13) étant accouplé à la surface de transport (4) par l'intermédiaire d'un élément de liaison (16) créant une distance constante ou le système de levage de la base (13) étant déplaçable par l'intermédiaire d'un entraînement séparé,
de sorte que sous chaque contenant (2) se trouve à chaque instant une zone partielle de la base (1) et sur la rangée (A) de contenants (2) sous laquelle on déplace par la suite la surface de transport (4), au moins sur son côté faisant face à la surface de transport (4), avant le passage sous la base (1), un espace libre (15) soit créé entre les fonds inférieurs des contenants (2) de ladite rangée (A) et la base (1), de sorte que la surface de transport (4) puisse être guidée sous les contenants (2) de ladite rangée (A).

3. Dispositif selon l'une quelconque des revendications 1 ou 2, **caractérisée en ce que** le système de levage de la base (13) est logé en étant abaissable.

4. Dispositif destiné à soulever une couche, constituée d'une pluralité de contenants (2) ou similaires, avec
- une base (1),
- un système de levage (3), le système de levage (3) comportant une surface de transport (4) déplaçable à la parallèle de la base (1), notamment conçue en tant que store à lamelles et de préférence aussi avec un cadre (5) conçu de telle façon que, par retournement autour la couche de contenants (2) ou par introduction des contenants (2) dans le cadre (5), le cadre (5) peut être posé autour, avant le soulèvement de la couche, le système de levage (3) étant rapproché de la couche, de telle sorte que la surface de transport (4) qui n'est pas encore sortie dans sa position de levage se trouve avec son arête antérieure (12) devant la première rangée (A) de la couche et soit ensuite poussée sous la couche dans sa position de levage, par déplacement relatif par rapport aux contenants (2) sous les contenants (2) posés sur la base (1),
vue dans la direction de passage inférieur (14), la surface de transport (4) comportant sur son arête antérieure des zones d'arête antérieure (23) conçues à la manière d'un peigne,
**caractérisé en ce que**
sur sa surface qui fait face à la surface de transport (4), la base (1) comporte des évidements (22), orientés à la parallèle de la direction de passage inférieur (14), conçus à la manière de rigoles, à chaque zone d'arête antérieure (23) étant associé un évidement (22), **en ce que** l'arête antérieure (12) de la surface de transport (4) comporte une surface s'étendant vers l'extrémité libre, en inclinaison vers le bas, en direction de la base (1),
de sorte que lors du déplacement de la surface de transport (4) dans sa position de levage, les zones d'arête antérieure (23) puissent être introduites dans les évidements (22) correspondants,
de sorte qu'à chaque instant, une zone partielle de la base (1) se trouve sous chaque contenant (2) et sur la rangée (A) de contenants (2) sous laquelle l'on déplace par la suite la surface de transport (4), les zones d'arête antérieure (23) de la surface de transport (4) puissent être guidées sous ladite rangée (A) de contenants (2).

5. Dispositif destiné à soulever une couche, constituée d'une pluralité de contenants (2) ou similaires, avec
- une base (1),
- un système de levage (3), le système de levage (3) comportant une surface de transport (4) déplaçable à la parallèle de la base (1), notamment conçue en tant que store à lamelles et de préférence aussi avec un cadre (5) conçu de telle façon que, par retournement autour la couche de contenants (2) ou par introduction des contenants (2) dans le cadre (5), le cadre (5) peut être posé autour, avant le soulèvement de la couche, le système de levage (3) étant rapproché de la couche, de telle sorte que la surface de transport (4) qui n'est pas encore sortie dans sa position de levage se trouve avec son arête antérieure (12) devant la première rangée (A) de la couche et soit ensuite poussée sous la couche dans sa position de levage, par déplacement relatif par rapport aux contenants (2) sous les contenants (2) posés sur la base (1),
**caractérisé en ce que**
la base (1) est conçue en tant qu'une surface de convoyage mobile dans la direction de déplacement (26) constituée de plusieurs segments reliés entre eux de manière articulée par des axes orientés vers la direction de déplacement (26), chaque segment (25) comportant sur sa face supérieure un évidement (22) qui est conçu en tant que rainure orientée de manière orthogonale vers la direction des passage inférieur (14),
et **en ce que** l'arête antérieure (12) de la surface de transport (4) comporte une surface s'étendant vers l'extrémité libre, en inclinaison vers le bas, en direction de la base (1),
de sorte que lors du déplacement de la surface de transport (4) dans sa position de levage, l'arête antérieure (12) puisse être introduite dans l'évidement (22), alors qu'entre la base (1) et la surface de transport (4), il ne subsiste aucun déplacement relatif,
de sorte qu'à chaque instant, une zone partielle de la base (1) se trouve sous chaque contenant (2) et sur la rangée (A) de contenants (2) sous laquelle par la suite, l'on déplace la surface de transport (4), l'arête antérieure (12) de la surface de transport (4) puisse être guidée dans l'évidement (22) sous les contenants (2) de ladite rangée (A) encore posés sur la base (1).

6. Dispositif selon l'une quelconque des revendications 4 ou 5, **caractérisé en ce qu'**au moins dans la direction de déplacement (14, 26), la base (1) est conçue en version souple.

7. Procédé destiné à soulever une couche constituée d'une pluralité de contenants (2) ou similaires au moyen d'un dispositif selon la revendication 1 :
- lors duquel, avant le soulèvement de la couche, on déplace le système de levage (3) contre la couche et de préférence on pose autour le cadre (5) par retournement autour la couche de contenants (2) ou par introduction des contenants (2) dans le cadre (5),
- avec son arête antérieure (12), la surface de transport (4) qui n'est pas encore sortie dans sa position de levage se trouvant à l'avant de la première rangée (A) de la couche et soit poussée ensuite sous la couche dans sa position de levage par un déplacement relatif par rapport aux contenants (2), sous les contenants (2) posés sur la base (1),
- vu dans la direction de passage antérieur (14), dans la zone adjacente d'une part à la rangée (A) de contenants (2) sous laquelle on déplace par la suite la surface de transport (4) et qui d'autre part fait face à la surface de transport (4) sous laquelle rien n'a encore été passé, le système de levage de la base (13) étant placé à une faible distance à l'avant de l'arête antérieure (12) de la surface de transport (4) et étant déplacé de manière synchrone avec la surface de transport (4) déplaçable dans la position levage, de sorte qu'à chaque instant, une zone partielle de la base (1) se trouve sous chaque contenant (2) et sur la rangée (A) de contenants (2) sous laquelle on déplace par la suite la surface de transport (4), au moins sur son côté faisant face à la surface de transport (4), avant le passage sous la base (2), il soit créé un espace libre (15) entre les fonds inférieurs des contenants (2) de ladite rangée (A) et la base (1) et que la surface de transport (4) soit guidée sous les contenants (2) de ladite rangée (A).

8. Procédé destiné à soulever une couche, constituée d'une pluralité de contenants (2) ou similaires, au moyen d'un dispositif selon la revendication 2 :
- lors duquel, avant le soulèvement de la couche, on déplace le système de levage (3) contre la couche et de préférence on pose autour le cadre (5) par retournement autour la couche de contenants (2) ou par introduction des contenants (2) dans le cadre (5),
- avec son arête antérieure (12), la surface de transport (4) qui n'est pas encore sortie dans sa position de levage se trouvant à l'avant de la première rangée (A) de la couche et soit poussée ensuite sous la couche dans sa position de levage par un déplacement relatif par rapport aux contenants (2), sous les contenants (2) posés sur la base (1),
- vu dans la direction de passage antérieur (14), dans la zone adjacente d'une part à la rangée (A) de contenants (2) sous laquelle on déplace par la suite la surface de transport (4) et qui d'autre part fait face à la surface de transport (4) sous laquelle rien n'a encore été passé, l'élément plat (18) adjacent du système de levage de la base (13) étant placé à une faible distance à l'avant de l'arête antérieure (12) de la surface de transport (4) et étant déplacé de manière synchrone avec la surface de transport (4) déplaçable dans la position de levage, de sorte qu'à chaque instant, une zone partielle de la base (1) se trouve sous chaque contenant (2) et sur la rangée (A) de contenants (2) sous laquelle on déplace par la suite la surface de transport (4), au moins sur son côté faisant face à la surface de transport (4), avant le passage sous la base (1), il soit créé un espace libre (15) entre les fonds inférieurs des contenants (2) de ladite rangée (A) et la base (1) et que la surface de transport (4) soit guidée sous les contenants (2) de ladite rangée (A).

9. Procédé destiné à soulever une couche, constituée d'une pluralité de contenants (2) ou similaires, au moyen d'un dispositif selon la revendication 4 :
- lors duquel, avant le soulèvement de la couche, on déplace le système de levage (3) contre la couche et de préférence on pose autour le cadre (5) par retournement autour la couche de contenants (2) ou par introduction des contenants (2) dans le cadre (5),
- avec son arête antérieure (12), la surface de transport (4) qui n'est pas encore sortie dans sa position de levage se trouvant à l'avant de la première rangée (A) de la couche et les zones d'arête antérieure (23) étant introduites dans les évidements (22) correspondants et étant poussées ensuite sous la couche dans sa position de levage par un déplacement relatif par rapport aux contenants (2) sous les contenants (2) placés sur la base (1), de sorte qu'à chaque instant, une zone partielle de la base (1) se trouve sous chaque contenant (2) et sur la rangée (A) de contenants (2) sous laquelle on déplace par la suite la surface de transport (4), les zones d'arêtes antérieures (23) de la surface de transport (4) soit guidées dans les évidements (22) correspondants, sous ladite rangée (A) de contenants.

10. Procédé destiné à soulever une couche, constituée d'une pluralité de contenants (2) ou similaires, au moyen d'un dispositif selon la revendication 5 :
- lors duquel, avant le soulèvement de la couche, on déplace le système de levage (3) contre la couche et de préférence on pose autour le cadre (5) par retournement autour la couche de contenants (2) ou par introduction des contenants (2) dans le cadre (5),
- avec son arête antérieure (12), la surface de transport (4) qui n'est pas encore sortie dans sa position de levage se trouvant à l'avant de la première rangée (A) de la couche et l'arête antérieure (12) se trouvant dans un évidement (22) de la base et ensuite la surface de transport (4) étant déplacée dans sa position de levage par un déplacement relatif par rapport aux contenants (2) et sans déplacement relatif par rapport à la base (1) sous les contenants (2) placés sur la base (1), de sorte qu'à chaque instant, une zone partielle de la base (1) se trouve sous chaque contenant (2) et sur la rangée (A) de contenants (2) sous laquelle on déplace par la suite la surface de transport (4), l'arête antérieure (12) de la surface de transport (4) se trouve dans l'évidement (22) sous ladite rangée (A) de contenants.
